(19) Europäisches Patentamt
European Patent Office
Office européen des brevets

(11) Publication number: 0 535 650 A2

(12) # EUROPEAN PATENT APPLICATION

(21) Application number: 92116771.4

(22) Date of filing: 30.09.92

(30) Priority: 30.09.91 JP 252193/91
30.09.91 JP 252201/91
30.09.91 JP 252205/91
30.09.91 JP 252209/91
30.09.91 JP 252210/91
30.09.91 JP 252211/91
30.09.91 JP 252368/91
30.09.91 JP 252383/91
30.09.91 JP 252385/91
30.09.91 JP 252392/91

(43) Date of publication of application:
07.04.93 Bulletin 93/14

(84) Designated Contracting States:
DE FR GB

(51) Int. Cl.$^5$: B29C 67/24, B29B 17/00

(71) Applicant: Mazda Motor Corporation
No. 3-1, Shinchi Fuchu-cho
Aki-gun Hiroshima-ken(JP)

(72) Inventor: Sasaki, Keita
2-12-6, Mukainadashinmachi, Minami-ku
Hiroshima-shi,Hiroshima-ken(JP)
Inventor: Shinomori, Masatoshi
1126-9, Kamihera
Hatsukaichi-shi,Hiroshima-ken(JP)
Inventor: Tomita, Takashi
16-20-201, Ushitahigashi 2-chome, Higashi-ku
Hiroshima-shi,Hiroshima-ken(JP)
Inventor: Ohsugi, Masakatsu
11-8-1114, Aosakihigashi, Fuchu-cho
Aki-gun,Hiroshima-ken(JP)
Inventor: Matsuda, Yushi
1032-1-J-302, Oazamiyaryo, Takaya-cho
Higashihiroshima-shi, Hiroshima-ken(JP)
Inventor: Kaneko, Mitsuharu
24-1-3505, Yoshishimahigashi 1-chome,
Naka-ku
Hiroshima-shi, Hiroshima-ken(JP)

(74) Representative: Müller-Boré & Partner
Patentanwälte
Isartorplatz 6 Postfach 26 02 47
W-8000 München 2 (DE)

(54) **Molding resin composition.**

(57) The present invention provides a molding resin composition which is capable of recycling or remolding use and, when remolded, keeps excellent strength and stiffness. The molding resin composition of the present invention comprises a matrix resin formed from a thermoplastic resin and a reinforcing material formed from a liquid crystal resin having a higher melting point than the thermoplastic resin; an amount of the liquid crystal resin formulated into the thermoplastic resin being within a fiberizable area and less than a phase-reversing concentration.

EP 0 535 650 A2

## BACKGROUND OF THE INVENTION

### (Field of the Invention)

The present invention relates to a molding resin composition which comprises a matrix resin formed from a thermoplastic resin and a reinforcing material formed from a liquid crystal resin.

### (Description of the Prior Art)

Hitherto, there have been known many articles molded from a synthetic resin which is mixed or reinforced with glass fiber, long fiber glass and carbon fiber. The molded articles have excellent strength and stiffness.

It is also proposed in Japanese Kokai Publication 320128/1989 that a resin composition containing a liquid crystal resin (or liquid crystal polymer) and a thermoplastic resin is extruded with stretching at more than liquid crystal transition temperatures to obtain resin strands, which are cut into 1 to 40 mm and then extrusion-molded at less than liquid crystal transition temperatures to obtain a molded article. The molded article has excellent strength and stiffness, although it does not contain reinforcing fiber, such as glass fiber and carbon fiber.

It has been recently desired that the molded articles are recycled and remolded into other articles in view of resource saving and protection. However, when the molded articles which are reinforced by glass fiber and carbon fiber are recycled, the reinforcing fiber mixed therein is finely cut in the step of grinding the molded articles and badly deteriorates its reinforcing function. Accordingly, the resulting recycled articles have poor strength and stiffness.

## SUMMARY OF THE INVENTION

The present invention is to provide a molding resin composition which can be subjected to recycling or remolding use and, when remolded, keeps excellent strength and stiffness. The molding resin composition of the present invention comprises a matrix resin formed from a thermoplastic resin and a reinforcing material formed from a liquid crystal resin having a higher melting point than the thermoplastic resin; an amount of the liquid crystal resin formulated into the thermoplastic resin being within a fiberizable area and less than a phase-reversing concentration.

## DETAILED DESCRIPTION OF THE INVENTION

Figs.1 and 2 schematically show the phenomenon of the present invention.

First of all, the thermoplastic resin is uniformly mixed with the liquid crystal resin having a higher melting point than the thermoplastic resin, at more than the melting point of the liquid crystal resin (C). The resulting resin mixture is then molded under stretching at a moldable temperature which is less than the melting point of the liquid crystal resin and more than the melting point of the thermoplastic resin. The molded article is reinforced in the form that the liquid crystal resin is fibrously oriented to the stretching direction in the matrix resin (thermoplastic resin).

According to the present invention, it is very important that an amount of the liquid crystal resin is limited to a fiberizable area and less than a phase-reversing concentration. The specific amount is varied based on sorts of the matrix resin, liquid crystal resin and its combination. This is explained with reference to Fig.2. In this context, by the term "phase-reverse" is meant that the liquid crystal resin (L) and the matrix resin (M) are generally phase - separated in the molded article, but the separation is changed from L in M type to M in L type, or from M in L type to L in M type. The term "fiberizable area" means an area that the liquid crystal resin has an aspect ratio of 3 or more after extrusion molding. As shown in Fig.2, the flowability of the resin composition at molding slowly reduces, but the tensile strength sharply increases. When the liquid crystal resin content is more than the phase-reversing point from L in M type to M in L type, the flowability rapidly reduces and makes molding difficult. It is therefore understandable that the amount of the liquid crystal resin is limited to within the fiberizable area and less than the phase-reversing concentration.

The resin composition is subjected to recycling or remolding use. Molded articles obtained from the resin composition of the present invention are generally ground to chips which are then used for molding compositions. If necessary, another thermoplastic resin and/or liquid crystal resin may be additionally added thereto to improve physical properties of the recycled article.

Fig.3 schematically shows embodiments of the improvement of the physical properties of the recycled article. As shown in Fig.3 (a), when the ground chips of the molded article are only used, the recycled article has the same physical properties as the molded article. As shown in Fig.3 (b), when the ground chips of the molded article are combined with another liquid crystal resin or matrix resin, the function obtained from each resin may be improved. As shown in Fig.3 (C), ground chips of the molded article which contain a lower amount of the liquid crystal resin are mixed with ground chips of another molded article which contains a higher amount of the liquid crystal resin, the recycled article has properties between the both molded articles. As shown in Fig.3 (d), a content of liquid crystal resin can be changed by adding another matrix or liquid crystal resin.

The matrix resin of the present invention is one which is known to the art as thermoplastic resin. Typical examples of the matrix resins are polycarbonate/ABS (acrylonitrile-butadiene - styrene copolymer), polypropylene, modified polyphenylene, ABS resin, nylon (e.g. nylon 6), polycarbonate, polyphenylene oxide/nylon, polycarbonate/polybutylene terephthalate, polybutylene terephthalate, mixtures thereof and the like. The polycarbonate/ABS resin is commercially available, for example Techni-Ace T-105 (available from Sumitomo Norgatac Co., Ltd.), T - 2,600 (available from Teijin Chemical Co., Ltd.), Sceicoloy (available from Ube Sceicon Co., Ltd.) and the like. The polypropylene is commercially available, for example H501 (available from Sumitomo Chemical Co., Ltd.), J440 (available from Mitsui Petrochemical Industries, Ltd.), H950H (available from Idemitsu Petrochemical Co., Ltd.) and the like. The modified polyphenylene oxide, especially styrene-modified polyphenylene oxide, is commercially available, for example Nolyl PX 2623 (available from Japan GE Plastics Co., Ltd.), Upi-Ace AN-30 (available from Mitsubishi Gas Chemical Co., Inc.), Zylon X 5055 (available from Asahi Chemical Industry Co., Ltd.) and the like. The ABS resin is commercially available, for example Plastic MH (available from Sumitomo Norgatac Co., Ltd.), Sceicolac T (available from Ube Sceicon Co., Ltd.), GR-2,000 (available from Denki Kagaku Kogyo K.K.) and the like. The nylon is commercially available, for example 1013 B (available from Ube Industries, Ltd.), CM1017 (available from Toray), Techneel C216 (available from Showa Denko Co., Ltd.) and the like. The polycarbonate is commercially available, for example 141 (available from Japan GE Plastics Co., Ltd.), Panlight 1250 (available from Teijin Chemical Co., Ltd.), U-Piron - 1,000 (available from Mitsubishi Gas Chemical Co., Ltd.) and the like. The polyphenylene oxide/nylon is commercially available, for example Nolyl GTX 6,006 (available from Japan GE Plastics Co., Ltd.), Upi-Ace NX-7,000 (available from Mitsubishi Gas Chemical Co., Ltd.) and the like. The polycarbonate/polybutadiene terephthalate is commercially available, for example Zenoy 1101 (available from Japan GE Plastics Co., Ltd.), AM-9060 (available from Teijin Chemical Co., Ltd.) and the like.

The liquid crystal resin in the present invention is a reinforcement material uniformly dispersed in the matrix resin and comes to have a shape of fiber provided with an aspect ratio described below by melt-extruding step of the present invention. The liquid crystal resin has a melting point higher, preferably by 20° C or more, than the melting point of the matrix resin. Because, if the melting point would be lower than the matrix resin, the liquid crystal resin can not be formed to a fiber shape in the resultant composite and even if it can be formed to a fiber shape, the orientation does not come to be constant, therefore resulting in insufficient strength of the liquid crystal resin composite.

Examples of the liquid crystal resin for use of the present invention includes any known ones as long as the above properties are provided and are not limited to specific ones. Among them, a thermoplastic liquid crystal polyester and a thermoplastic polyesteramide are preferable. More preferable examples are indicated below by the following chemical structures.

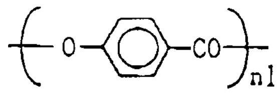 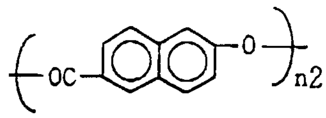

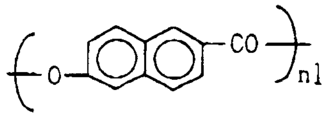 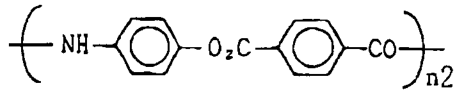

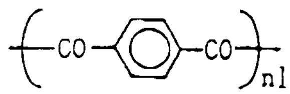 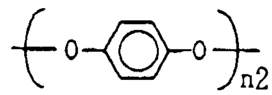

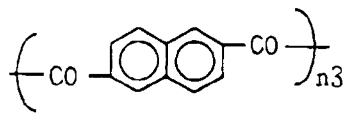

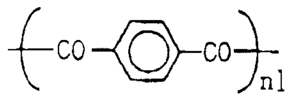 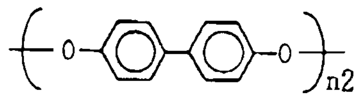

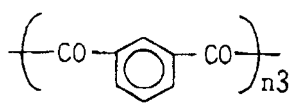 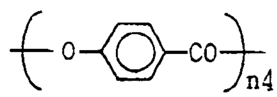

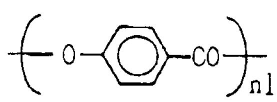 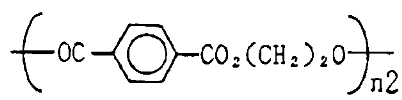

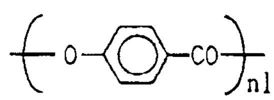

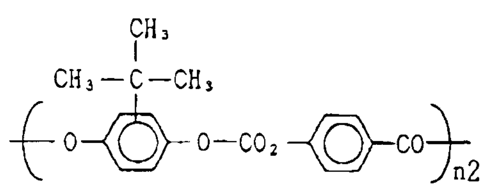

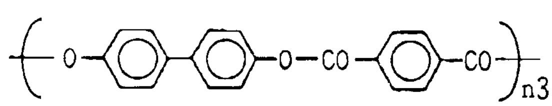

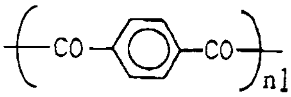
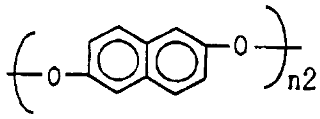

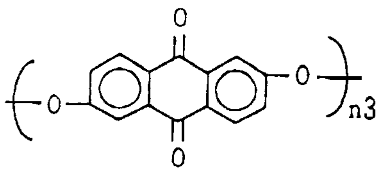
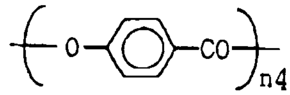

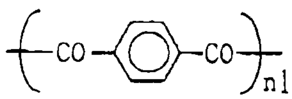

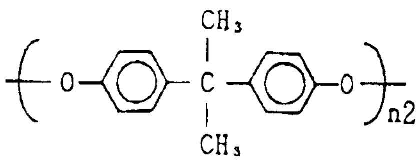

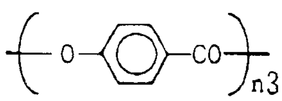

$-(OCHCHO)_{n4}-$

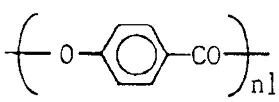

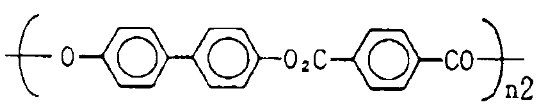

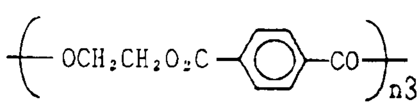

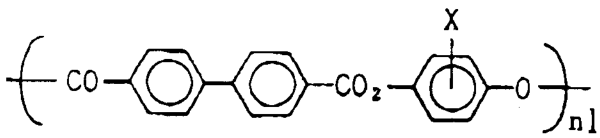

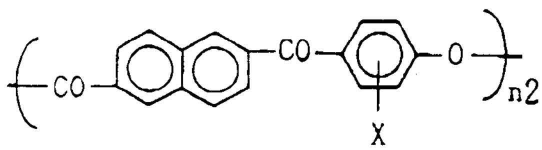

wherein X is hydrogen, halogen, alkyl having 4 carbon atoms or less.

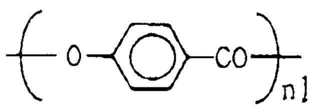

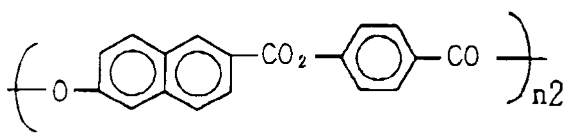

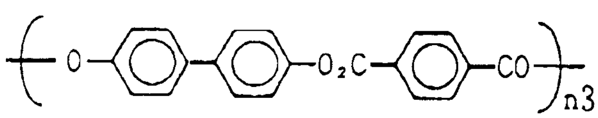

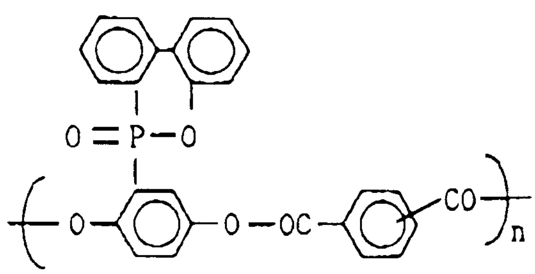

wherein Σni = 100, preferably ni of the chemical structure is more than 4.

In the formula, a variety of substitutent such as halogen may be added. The above liquid crystal resin is suitable for the modified polyester resin because the mixture is easy to be molded under a melting condition and result in a composite fiber having a high strength and elastic modules.

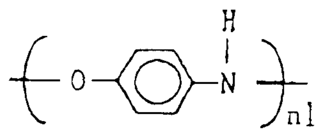

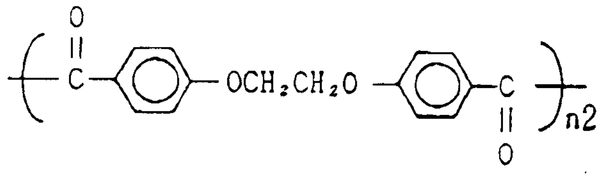

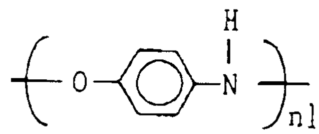

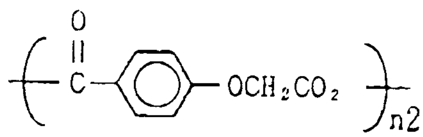

Similarly, any liquid crystal polyesteramide may be used without limitation. Particularly, the liquid crystal resin represented by the following formula is preferable in the present invention.

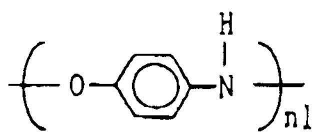

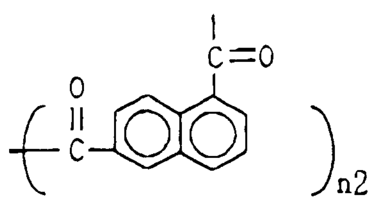

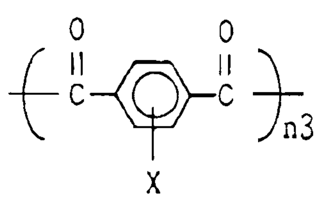

wherein X is hydrogen, halogen, alkyl having 4 carbon atoms or less.

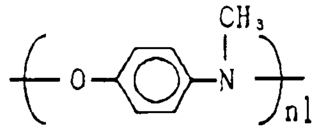

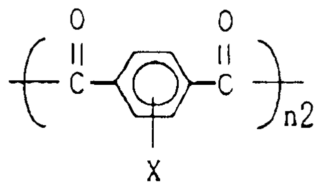

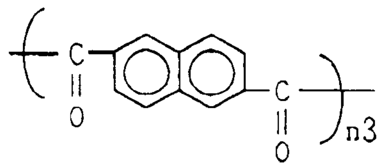

wherein X is hydrogen, halogen, alkyl having 4 carbon atoms or less.

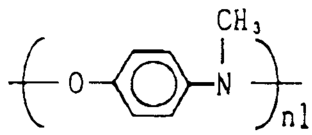

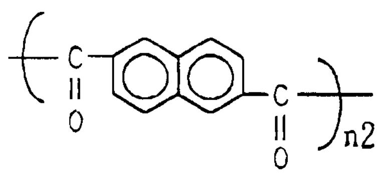

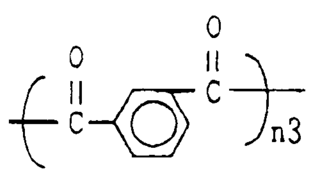

wherein $\Sigma ni = 100$, preferably ni of the chemical structure is more than 15.

In the formula, a variety of substitutent such as halogen may be added. The above liquid crystal resin is easy to be molded under a melting condition as similar to polyarylate liquid crystal resin and result in a fiber having a high strength.

The content of the liquid crystal resin is varied based on the sorts of matrix resin and preferable contents are listed as follow.

| Matrix resin | Content (% by weight) based on the total weight of the composition |
|---|---|
| Polycarbonate/ABS | 30 to 70 |
| Polypropylene | 2 to 70 |
| Modified polyphenylene | 3 to 60 |
| ABS resin | 30 to 75 |
| Nylon | 40 to 80 |
| Polycarbonate | 3 to 70 |
| Polyphenylene oxide/nylon | 2 to 65 |
| Polycarbonate/polybutylene terephthalate | 2 to 60 |
| Polybutylene terephthalate | 10 to 70 |

If the content is less than the lower limit, the resulting molded article has poor strength. If it is more than the upper limit, moldability is poor.

The molding resin composition of the present invention, if necessary, may contain a sunproofing agent, an antioxidant, a plasticizer and any other additive as long as it does not prevent the liquid crystal resin from forming a fiber. Among them, there may be added a compatibilizing agent which provides an improved bonding power between the matrix phase and the liquid crystal resin fiber phase, for example such a compatibilizing agents including a modified matrix resin by a compound with epoxy groups or an acid anhydride in the case of using ABS resin, polystyrene resin, polycarbonate resin, polyphenyleneoxide resin or polyolefin resin as a matrix resin and a compound having more than 2 of epoxy group, carboxyl group, oxazolynyl group or amino group in the case of using polyester resin, polyarylate resin or polyamide resin as a matrix resin.

According to the present invention, a resin composition containing the liquid crystal resin of a suitable content for fiber formation in the matrix resin may be molded into a product or a molding raw material in a manner to provide the liquid crystal resin with orientation property after heated to more than melting point of the liquid crystal resin and be made to a melting state. Such orientation can be generally provided by means of extrusion molding or injection molding. Therefore, a final product having the liquid crystal resin with high degree of orientation can be directly formed by the above method, but the final product may be formed through a molding raw material such as pellet having the liquid crystal resin with high degree of orientation by means of melt-molding in an extruder or injector.

The fiber of the liquid crystal resin has an aspect ratio (length/diameter ratio) of 3 or more, preferably that of 10 or more. In the case of less than 3 of the aspect ratio, the molded product becomes not to be an anisotropic one and can not be provided with a sufficient strength in a oriented direction.

Fig.4 schematically shows an embodiment of recycle. In this drawing, the molding process is the same as mentioned above, but the recycle process is added. The molded article is recollected and ground into chips which are again melted to recycle. If necessary, another liquid crystal resin or matrix resin can be added to the chips.

The molding resin composition of the present invention provides molded articles which have excellent strength and stiffness, by controlling content of the liquid crystal resin in the resin composition. The resin composition is very suitable for recycle use. The articles obtained from the molding resin composition of the present invention can be easily recycled by merely grinding them and melting. The articles obtained by the recycle have the same physical properties as the original articles. The composition can be repeatedly recycled and save a large amount of natural resource.

## BRIEF EXPLANATION OF THE DRAWINGS

This and other objects and features of the present invention will become clear from the following description taken in conjunction with preferred embodiments thereof with reference to the accompanying drawings, in which like parts are designated by like reference numerals and in which:

Figs.1 and 2 schematically show the phenomenon of the present invention.

Fig.3 schematically shows embodiments of the improvement of the physical properties of the recycled article.

Fig.4 schematically shows an embodiment or recycle.

Fig.5 shows a result of the tension testing for the first molding material and the recycled molding material, obtained in Example 1.

Fig.6 shows a relationship between a liquid crystal resin content in the matrix resin and a flowing length ratio, obtained in Example 1.

Fig.7 shows a result of the tension testing for the first molding material and the recycled molding material, obtained in Example 2.

Fig.8 shows a relationship between a liquid crystal resin content in the matrix resin and a flowing length ratio, obtained in Example 2.

Fig.9 shows a result of the tension testing for the first molding material and the recycled molding material, obtained in Example 3.

Fig. 10 shows a relationship between a liquid crystal resin content in the matrix resin and a flowing length ratio, obtained in Example 3.

Fig.11 shows a result of the tension testing for the first molding material and the recycled molding material, obtained in Example 4.

Fig. 12 shows a relationship between a liquid crystal resin content in the matrix resin and a flowing length ratio, obtained in Example 4.

Fig.13 shows a result of the tension testing for the first molding material and the recycled molding material, obtained in Example 5.

Fig.14 shows a relationship between a liquid crystal resin content in the matrix resin and a flowing length ratio, obtained in Example 5.

Fig.15 shows a result of the tension testing for the first molding material and the recycled molding material, obtained in Example 6.

Fig.16 shows a result of the tension testing for the first molding material and the recycled molding material, obtained in Example 7.

Fig.17 shows a relationship between a liquid crystal resin content in the matrix resin and a flowing length ratio, obtained in Example 7.

Fig.18 shows a result of the tension testing for the first molding material and the recycled molding material, obtained in Example 8.

Fig.19 shows a relationship between a liquid crystal resin content in the matrix resin and a flowing length ratio, obtained in Example 8.

Fig.20 shows a result of the tension testing for the first molding material and the recycled molding material, obtained in Example 9.

Fig.21 shows a relationship between a liquid crystal resin content in the matrix resin and a flowing length ratio, obtained in Example 9.

## EXAMPLES

### Example 1

A liquid crystal polymer as a starting material comprising BECTRA A 950 (aromatic polyester; liquid crystal transition temp. about 280°C; made by POLYPLASTIC CO.) and a matrix thermoplastic resin comprising Techni-Ace T105 (Polycarbonate (PC)/ABS, made by Sumitomo Norgatac Co., Ltd.) were mixed in a given mixture ratio to give a liquid crystal polymer mixture.

Next, the resin mixture is subjected to a primary extrusion molding. The molding is carried out in the following conditions: an extruding apparatus is a two axis extruder (screw diameter:36mm; made by PLASTIC TECHNOLOGY INSTITUTE CO.); a resin temp. is 290°C; a screw rotation is 100rpm; die diameter is 2mm; shear rate is 1700 $sec^{-1}$ and a drawing ratio is 2 times. The resin mixture is melt-extruded while being drawn into a first molding material of a strand form in a diameter of 1.4mm and thereafter cut into a first pellet material of 3mm in length.

Next, the first pellet material is subjected to an injection molding to give a liquid crystal polymer composite. The injection molding is carried out in the following condition: Injecting apparatus of 220 ton made by TOSHIBA KIKAI CO.; Die is a test piece type; Resin temp. is 250°C.

In this case, a flowing ability is tested by using the above injecting apparatus and a spiral flow type die (diameter: 6mm of semicircle) at the resin temperature of 250°C under an injecting pressure of 1000 $kg/cm^2$.

On the other hand, the injected resin composite is crushed into pellets of 3 to 4mm in length by means of a crushing apparatus V-360 made by HORAI CO. The pellets are melt-extruded into a strand material of

1.4mm in diameter for recycle test and cut into pellets of 3mm in length. The extrusion molding condition is the same as that of the primary extrusion molding.

The strands of the first molding material and the recycled molding material were subjected to a tension testing by Universal Testing Machine AUTO GRAPH made by SHIMAZU CO. under a tensile rate of 20mm/min.

Fig.5 shows a result of the tension testing for the first molding material and the recycled molding material, wherein the liquid crystal resin can be fiber formed in a range beyond 2 to 4 % content thereof and substantially the same tensile strength of the above two materials is observed in all content range of the liquid crystal resin. Therefore, it was confirmed that the tensile strength does not be lowered by remolding

On the other hand, Fig.6 shows a relationship between a liquid crystal resin content in the matrix resin and a flowing length ratio, wherein when the liquid crystal resin content is beyond 70%, the fluidity lowers so remarkably that the material is not difficult to use as a farmable material. Therefore, as a result of the above consideration, in the case of using PC/ABS as the matrix resin, the liquid crystal resin content is preferably in a range from 3% to 70%.

Further, the two materials were subjected to an observation for configuration by means of electromicrogragh. As a result, at 3 % content of the liquid crystal resin, most parts of the liquid crystal resin is in a granular shape and a part of the liquid crystal resin is in a fiber shape. At 4 %, 6 % and 8 % content of the liquid crystal resin, most parts of the liquid crystal resin is in a fiber shape. Therefore, it is understood that more than 2 to 4 % of the liquid crystal resin in the matrix resin makes it fiber formed and thus results in the improvement of the tensile strength.

Considering that, Composite Sample A containing 40 % of the liquid crystal resin was prepared by melt-extruding as generally described above. After it was injection molded, the resulting article was ground to give a recycle resin composition. The recycle resin composition was mixed with a fresh liquid crystal resin in a way to have a mixture ratio having 50 % of the liquid crystal resin. The resin mixture is subjected to a meld extruding to give Composite Sample B.

The recycle resin composition was mixed with a fresh matrix resin in a way to have a mixture ratio having 30 % of the liquid crystal resin and the resin mixture is subjected to an melt extruding under the same as the primary condition to give Composite Sample C.

The Samples A and B were separately subjected to injection molding to form two molded articles. The articles were ground as generally described in Example 1 and mixed in an equal amount so as to adjust the content of the liquid crystal resin to 40 % and then melt-extruded to obtain Sample D.

The four Sample were subjected to a tension testing and each tensile strength was measured. The result is indicated as follows:

TABLE

| Sample | A | B | C | D |
|---|---|---|---|---|
| Tensile Strength<br>Initial value | 205Mpa<br>175MPa | 150MPa<br>201MPa | 170MPa<br>151MPa | <br>175MPa |

It is clear from the above results that the recycled Samples have the same physical properties as the original one.

Example 2

A first molding material and a recycled molding material were prepared and the same tests were conducted as generally described in Example 1, with the exception that polypropylene (available from Sumitomo Chemical Co., Ltd. as H501) was employed instead of PC/ABS.

Fig.7 shows a result of the tension testing for the first molding material and the recycled molding material, wherein the liquid crystal resin can be fiber formed in a range beyond 2 to 4 % content thereof and substantially the same tensile strength of the above two materials is observed in all content range of the liquid crystal resin. Therefore, it Was confirmed that the tensile strength does not be lowered by remolding.

On the other hand, Fig.8 shows a relationship between a liquid crystal resin content in the matrix resin and a flowing length ratio, wherein when the liquid crystal resin content is beyond 75%, the fluidity lowers so remarkably that the material is not difficult to use as a farmable material. Therefore, as a result of the

above consideration, in the case of using polypropylene as the matrix resin, the liquid crystal resin content is preferably in a range from 2% to 75%.

Further, the two materials were subjected to an observation for configuration by means of electromicrogragh. As a result, at 2 % content of the liquid crystal resin, most parts of the liquid crystal resin is in a granular shape and a part of the liquid crystal resin is in a fiber shape. At 10 % content of the liquid crystal resin, most parts of the liquid crystal resin is in a fiber shape. Therefore, it is understood that more than 2 to 4 % of the liquid crystal resin in the matrix resin makes it fiber formed and thus results in the improvement of the tensile strength.

Example 3

A first molding material and a recycled molding material were prepared and the same tests were conducted as generally described in Example 1, with the exception that modified polyphenylene oxide (available from Japan GE Plastics Co., Ltd. as Nolyl PX 2623) was employed instead of PC/ABS.

Fig.9 shows a result of the tension testing for the first molding material and the recycled molding material, wherein the liquid crystal resin can be fiber formed in a range beyond 3 to 4 % content thereof and substantially the same tensile strength of the above two materials is observed in all content range of the liquid crystal resin. Therefore, it was confirmed that the tensile strength does not be lowered by remolding.

On the other hand, Fig.10 shows a relationship between a liquid crystal resin content in the matrix resin and a flowing length ratio, wherein when the liquid crystal resin content is beyond 60%, the fluidity lowers so remarkably that the material is not difficult to use as a farmable material. Therefore, as a result of the above consideration, in the case of using polypropylene as the matrix resin, the liquid crystal resin content is preferably in a range from 3% to 60%.

Further, the two materials were subjected to an observation for configuration by means of electromicrogragh. As a result, at 3 % content of the liquid crystal resin, most parts of the liquid crystal resin is in a granular shape and a part of the liquid crystal resin is in a fiber shape. At 4 %, 6 % and 8 % content of the liquid crystal resin, most parts of the liquid crystal resin is in a fiber shape. Therefore, it is understood that more than 3 to 4 % of the liquid crystal resin in the matrix resin makes it fiber formed and thus results in the improvement of the tensile strength.

Example 4

A first molding material and a recycled molding material were prepared and the same tests were conducted as generally described in Example 1, with the exception that ABS resin (available from Sumitomo Norgatac Co., Ltd. as Plastic MH) was employed instead of PC/ABS.

Fig.11 shows a result of the tension testing for the first molding material and the recycled molding material, wherein the liquid crystal resin can be fiber formed in a range beyond 30 % content thereof and substantially the same tensile strength of the above two materials is observed in all content range of the liquid crystal resin, Therefore, it was confirmed that the tensile strength does not be lowered by remolding.

On the other hand, Fig.12 shows a relationship between a liquid crystal resin content in the matrix resin and a flowing length ratio, wherein when the liquid crystal resin content is beyond 75%, the fluidity lowers so remarkably that the material is not difficult to use as a farmable material. Therefore, as a result of the above consideration, in the case of using polypropylene as the matrix resin, the liquid crystal resin content is preferably in a range from 30 % to 75 %.

Further, the two materials were subjected to an observation for configuration by means of electromicrogragh. As a result, at 30 % content of the liquid crystal resin, most parts of the liquid crystal resin is in a granular shape and a part of the liquid crystal resin is in a fiber shape. At 40 % content of the liquid crystal resin, most parts of the liquid crystal resin is in a fiber shape. Therefore, it is understood that more than 30 % of the liquid crystal resin in the matrix resin makes it fiber formed and thus results in the improvement of the tensile strength.

Example 5

A first molding material and a recycled molding material were prepared and the same tests were conducted as generally described in Example 1, with the exception that nylon-6 (available from Ube Industries Ltd. as 1013B) was employed instead of PC/ABS.

Fig.13 shows a result of the tension testing for the first molding material and the recycled molding material, wherein the liquid crystal resin can be fiber formed in a range beyond 40 % content thereof and substantially the same tensile strength of the above two materials is observed in all content range of the liquid crystal resin. Therefore, it was confirmed that the tensile strength does not be lowered by remolding.

On the other hand, Fig.14 shows a relationship between a liquid crystal resin content in the matrix resin and a flowing length ratio, wherein when the liquid crystal resin content is beyond 80%, the fluidity lowers so remarkably that the material is not difficult to use as a farmable material. Therefore, as a result of the above consideration, in the case of using polypropylene as the matrix resin, the liquid crystal resin content is preferably in a range from 40 % to 80 %.

Further, the two materials were subjected to an observation for configuration by means of electromicrogragh. As a result, at 40 % content of the liquid crystal resin, most parts of the liquid crystal resin is in a granular shape and a part of the liquid crystal resin is in a fiber shape. At 50 % content of the liquid crystal resin, most parts of the liquid crystal resin is in a fiber shape. Therefore, it is understood that more than 40 % of the liquid crystal resin in the matrix resin makes it fiber formed and thus results in the improvement of the tensile strength.

Example 6

A first molding material and a recycled molding material were prepared and the same tests were conducted as generally described in Example 1, with the exception that polycarbonate (available from Japan GE Plastics Co., Ltd. as 141) was employed instead of PC/ABS.

Fig.15 shows a result of the tension testing for the first molding material and the recycled molding material, wherein the liquid crystal resin can be fiber formed in a range beyond 2 to 4 % content thereof and substantially the same tensile strength of the above two materials is observed in all content range of the liquid crystal resin. Therefore, it was confirmed that the tensile strength does not be lowered by remolding. It should be noted that tensile strength once reduced at 30 %.

Example 7

A first molding material and a recycled molding material were prepared and the same tests were conducted as generally described in Example 1, with the exception that polyphenylene oxide/nylon (available from Japan GE Plastics Co., Ltd. as Nolyl GTX 6,006) was employed instead of PC/ABS.

Fig.16 shows a result of the tension testing for the first molding material and the recycled molding material, wherein the liquid crystal resin can be fiber formed in a range beyond 20 % content thereof and substantially the same tensile strength of the above two materials is observed in all content range of the liquid crystal resin. Therefore, it was confirmed that the tensile strength does not be lowered by remolding.

On the other hand, Fig.17 shows a relationship between a liquid crystal resin content in the matrix resin and a flowing length ratio, wherein when the liquid crystal resin content is beyond 65%, the fluidity lowers so remarkably that the material is not difficult to use as a farmable material. Therefore, as a result of the above consideration, in the case of using polypropylene as the matrix resin, the liquid crystal resin content is preferably in a range from 20 % to 65 %.

Further, the two materials were subjected to an observation for configuration by means of electromicrogragh. As a result, at 20 % content of the liquid crystal resin, most parts of the liquid crystal resin is in a granular shape and a part of the liquid crystal resin is in a fiber shape. At 30 % content of the liquid crystal resin, most parts of the liquid crystal resin is in a fiber shape. Therefore, it is understood that more than 20 % of the liquid crystal resin in the matrix resin makes it fiber formed and thus results in the improvement of the tensile strength.

Example 8

A first molding material and a recycled molding material were prepared and the same tests were conducted as generally described in Example 1, with the exception that polycarbonate/polybutylene terephthalate (available from Japan GE Plastics Co., Ltd. as Zenoy 1,101) was employed instead of PC/ABS.

Fig.18 shows a result of the tension testing for the first molding material and the recycled molding material, wherein the liquid crystal resin can be fiber formed in a range beyond 2 % content thereof and substantially the same tensile strength of the above two materials is observed in all content range of the liquid crystal resin. Therefore, it was confirmed that the tensile strength does not be lowered by remolding.

On the other hand, Fig.19 shows a relationship between a liquid crystal resin content in the matrix resin and a flowing length ratio, wherein when the liquid crystal resin content is beyond 70%, the fluidity lowers so remarkably that the material is not difficult to use as a farmable material. Therefore, as a result of the above consideration, in the case of using polypropylene as the matrix resin, the liquid crystal resin content is preferably in a range from 2 % to 60 %.

Further, the two materials were subjected to an observation for configuration by means of electromicrogragh. As a result, at 2 % content of the liquid crystal resin, most parts of the liquid crystal resin is in a granular shape and a part of the liquid crystal resin is in a fiber shape. At 4 %, 6 % and 8 % content of the liquid crystal resin, most parts of the liquid crystal resin is in a fiber shape. Therefore, it is understood that more than 2 to 4 % of the liquid crystal resin in the matrix resin makes it fiber formed and thus results in the improvement of the tensile strength.

Example 9

A first molding material and a recycled molding material were prepared and the same tests were conducted as generally described in Example 1, with the exception that polybutylene terephthalate (available from Toray Co., Ltd. as 1401X07) was employed instead of PC/ABS.

Fig.20 shows a result of the tension testing for the first molding material and the recycled molding material, wherein the liquid crystal resin can be fiber formed in a range beyond 10 % content thereof and substantially the same tensile strength of the above two materials is observed in all content range of the liquid crystal resin. Therefore, it was confirmed that the tensile strength does not be lowered by remolding.

On the other hand, Fig.21 shows a relationship between a liquid crystal resin content in the matrix resin and a flowing length ratio, wherein when the liquid crystal resin content is beyond 70%, the fluidity lowers so remarkably that the material is not difficult to use as a farmable material. Therefore, as a result of the above consideration, in the case of using polypropylene as the matrix resin, the liquid crystal resin content is preferably in a range from 10 % to 70 %.

Further, the two materials were subjected to an observation for configuration by means of electromicrogragh. As a result, at 10 % content of the liquid crystal resin, most parts of the liquid crystal resin is in a granular shape and a part of the liquid crystal resin is in a fiber shape At 20 % content of the liquid crystal resin, most parts of the liquid crystal resin is in a fiber shape. Therefore, it is understood that more than 10 % of the liquid crystal resin in the matrix resin makes it fiber formed and thus results in the improvement of the tensile strength.

## Claims

1. A molding resin composition comprising a matrix resin formed from a thermoplastic resin and a reinforcing material formed from a liquid crystal resin having a higher melting point than the thermoplastic resin; an amount of the liquid crystal resin formulated into the thermoplastic resin being within a fiberizable area and less than a phase-reversing concentration.

2. The molding resin composition according to Claim 1 wherein said liquid crystal resin in the composition has an aspect ratio of not less than 3.

3. The molding resin composition according to Claim 2 wherein said matrix resin is formed from polycarbonate/ABS and said liquid crystal resin is present in an amount of 30 to 70 % by weight based on the total weight of the composition.

4. The molding resin composition according to Claim 2 wherein said matrix resin is formed from polypropylene and said liquid crystal resin is present in an amount of 2 to 75 % by weight based on the total weight of the composition.

5. The molding resin composition according to Claim 2 wherein said matrix resin is formed from modified polyphenylene oxide and said liquid crystal resin is present in an amount of 3 to 60 % by weight based on the total weight of the composition.

6. The molding resin composition according to Claim 2 wherein said matrix resin is formed from ABS resin and said liquid crystal resin is present in an amount of 30 to 75 % by weight based on the total weight of the composition.

**7.** The molding resin composition according to Claim 2 wherein said matrix resin is formed from nylon and said liquid crystal resin is present in an amount of 40 to 80 % by weight based on the total weight of the composition.

**8.** The molding resin composition according to Claim 2 wherein said matrix resin is formed from polycarbonate and said liquid crystal resin is present in an amount of 3 to 70 % by weight based on the total weight of the composition.

**9.** The molding resin composition according to Claim 2 wherein said matrix resin is formed from polyphenylene oxide/nylon and said liquid crystal resin is present in an amount of 2 to 65 % by weight based on the total weight of the composition.

**10.** The molding resin composition according to Claim 2 wherein said matrix resin is formed from polycarbonate/polybutylene terephthalate (PBT) and said liquid crystal resin is present in an amount of 2 to 60 % by weight based on the total weight of the composition.

**11.** The molding resin composition according to Claim 2 wherein said matrix resin is formed from polybutylene terephthalate and said liquid crystal resin is present in an amount of 10 to 70 % by weight based on the total weight of the composition

**12.** The molding resin composition according to Claim 1, comprising:
(a) a ground molded article of the resin composition comprising a matrix resin formed from a thermoplastic resin and a reinforcing material formed from a liquid crystal resin having a higher melting point than the thermoplastic resin, and
(b) a thermoplastic resin and/or a liquid crystal resin capable of mixing with said matrix resin.

**13.** A remoldable resin composition comprising at least two sorts of ground molded articles of a resin composition according to Claim 1.

**14.** The remoldable resin composition according to Claim 13, further comprising a thermoplastic resin and/or a liquid crystal resin capable of mixing with said matrix resin.

Fig. 1

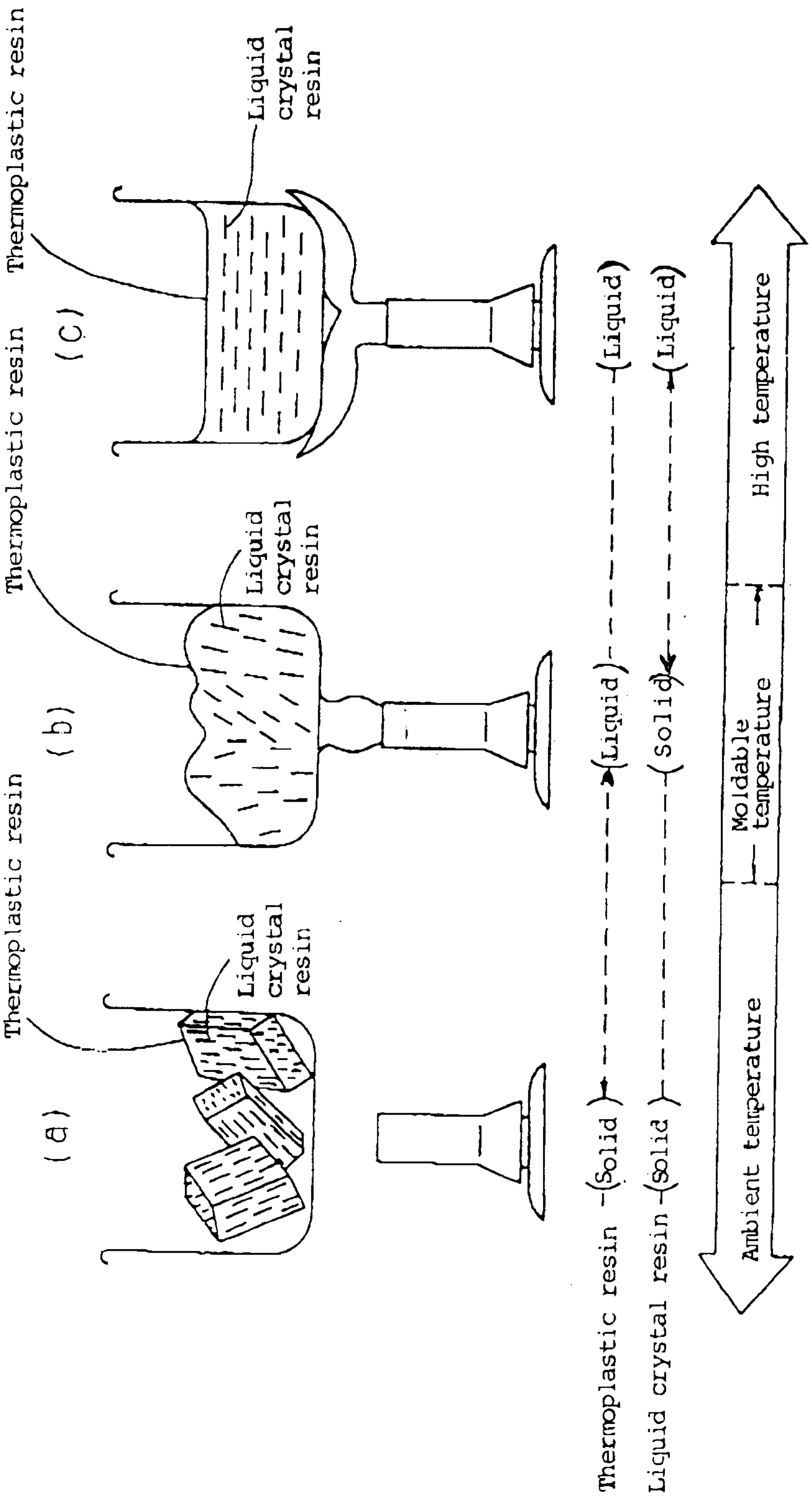
(a)
Thermoplastic resin
Liquid crystal resin
(b)
Thermoplastic resin
Liquid crystal resin
(c)
Thermoplastic resin
Liquid crystal resin
Thermoplastic resin
Liquid crystal resin
(Solid)
(Solid)
(Liquid)
(Solid)
(Liquid)
(Liquid)
Ambient temperature
Moldable temperature
High temperature

Fig. 2

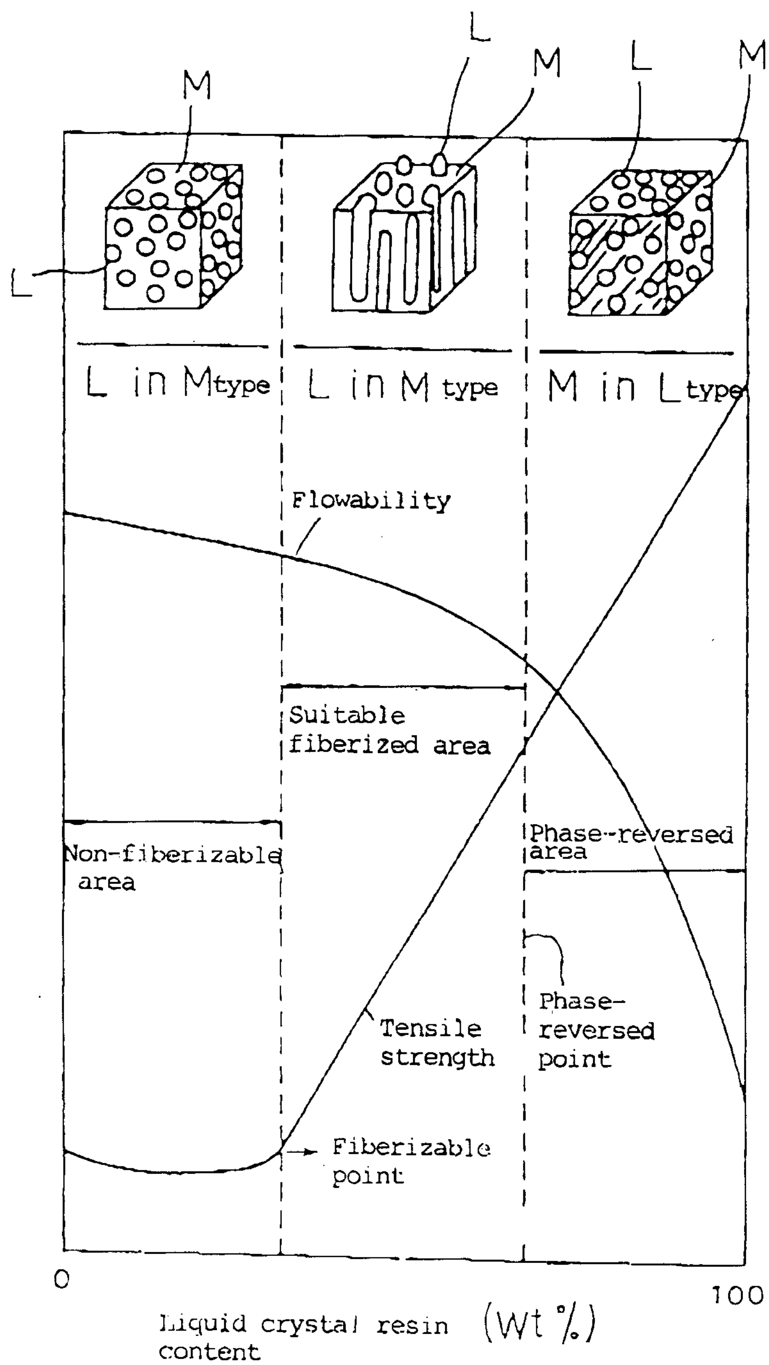
M
L
L
M
L
M
L in M type
L in M type
M in L type
Flowability
Suitable
fiberized area
Non-fiberizable
area
Phase-reversed
area
Phase-
reversed
point
Tensile
strength
Fiberizable
point
0
100
Liquid crystal resin
content
(Wt %)

Fig. 3

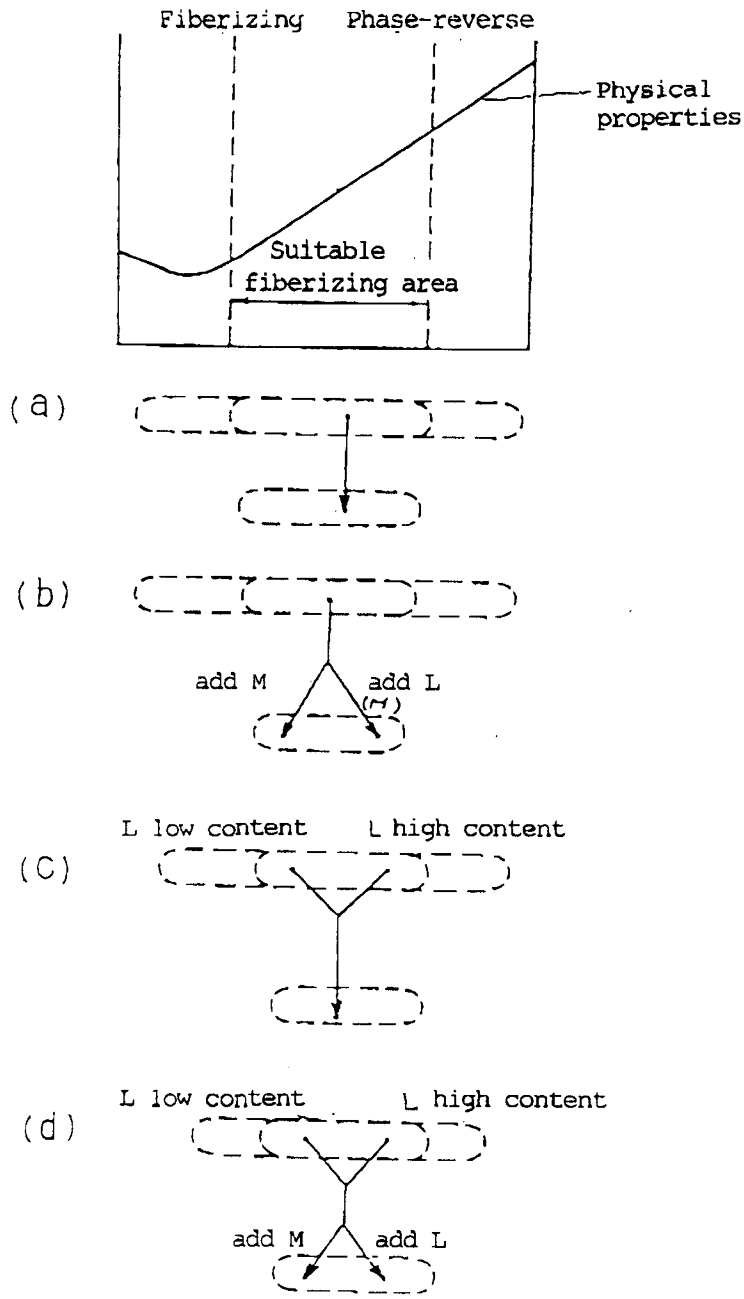
Fiberizing
Phase-reverse
Physical properties
Suitable fiberizing area
(a)
(b)
add M
add L
(c)
L low content
L high content
(d)
L low content
L high content
add M
add L

Fig. 4

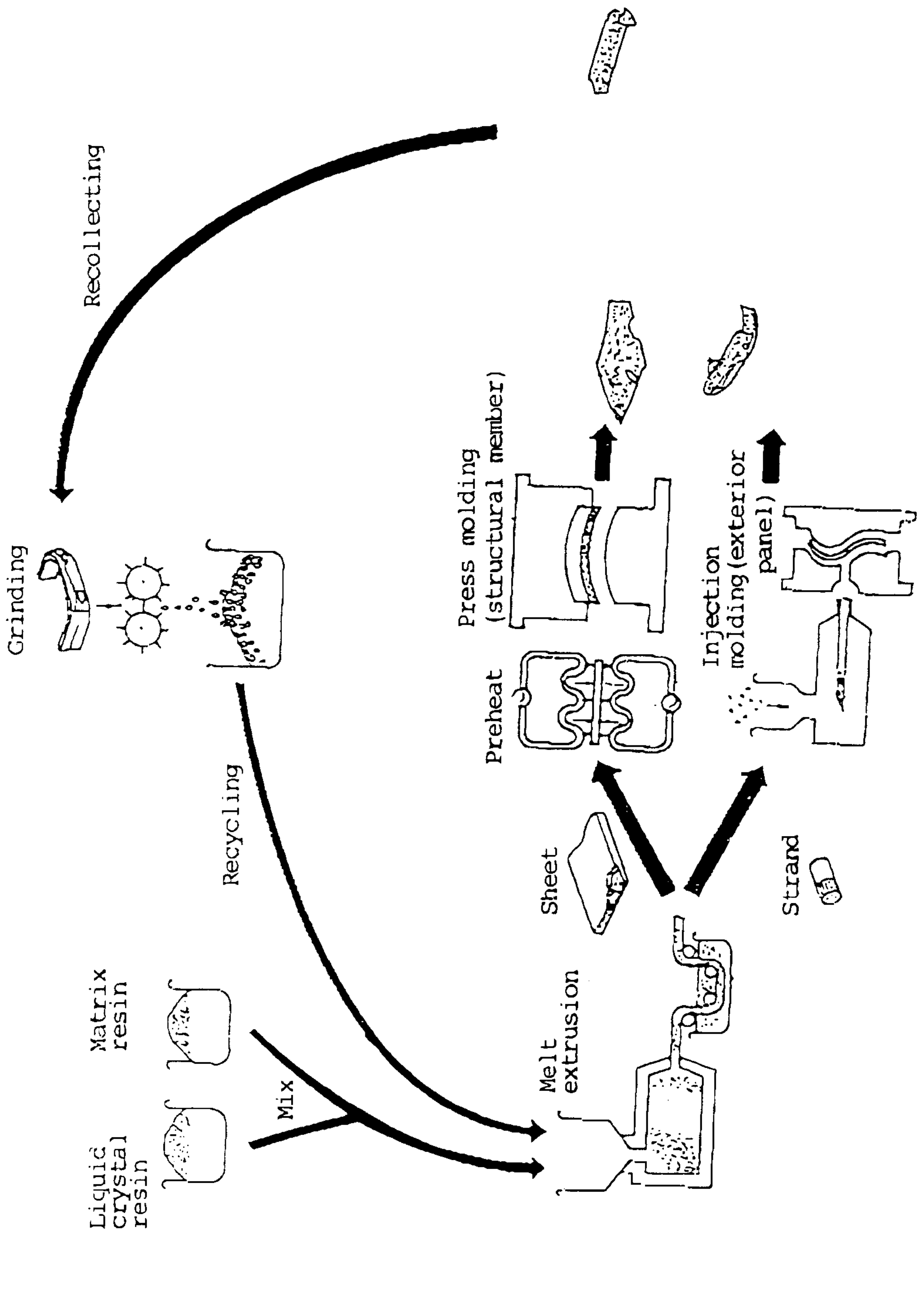
Recollecting
Grinding
Recycling
Press molding
(structural member)
Preheat
Injection
molding(exterior
panel)
Sheet
Strand
Melt
extrusion
Liquid
crystal
resin
Matrix
resin
Mix

Fig. 5

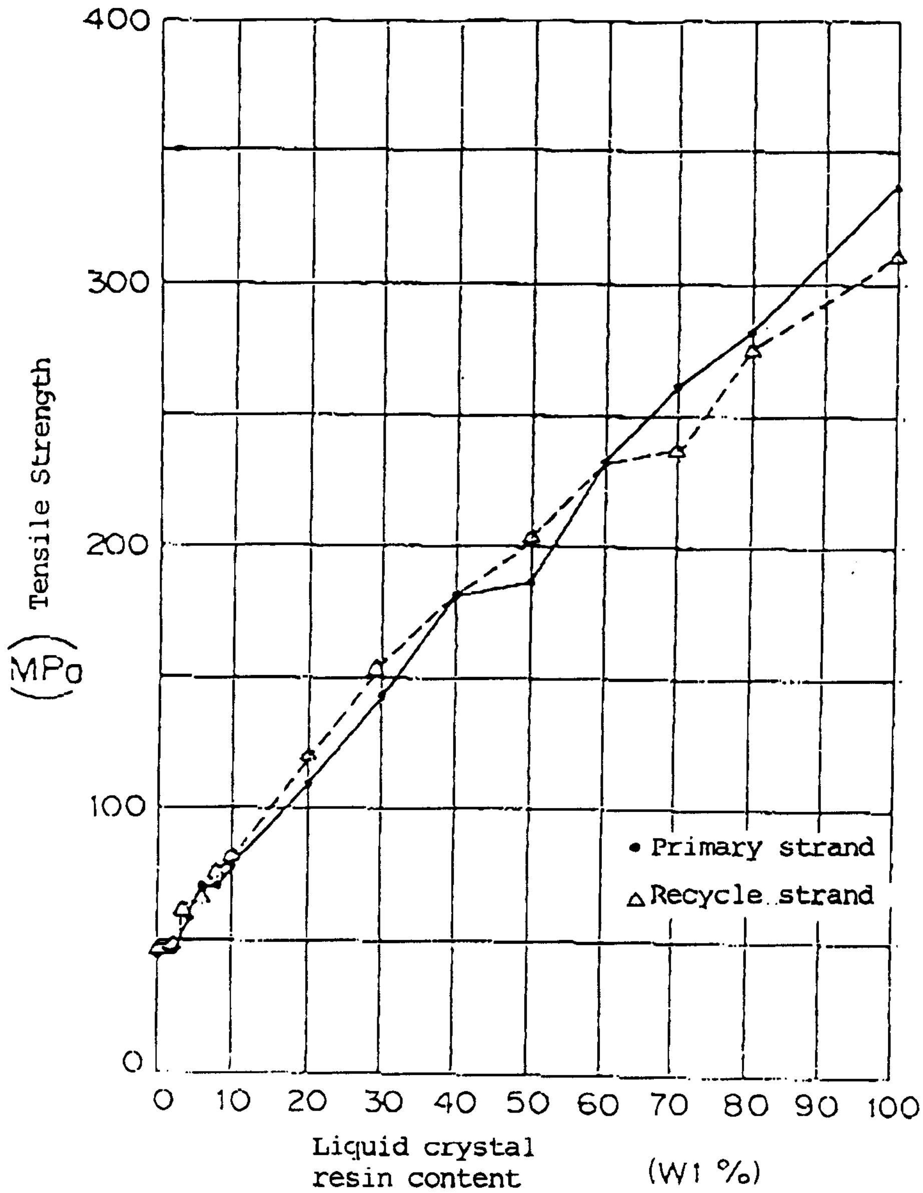
400
300
200
100
0
(MPa) Tensile Strength
0 10 20 30 40 50 60 70 80 90 100
Liquid crystal resin content (Wt %)
• Primary strand
△ Recycle strand

Fig. 6

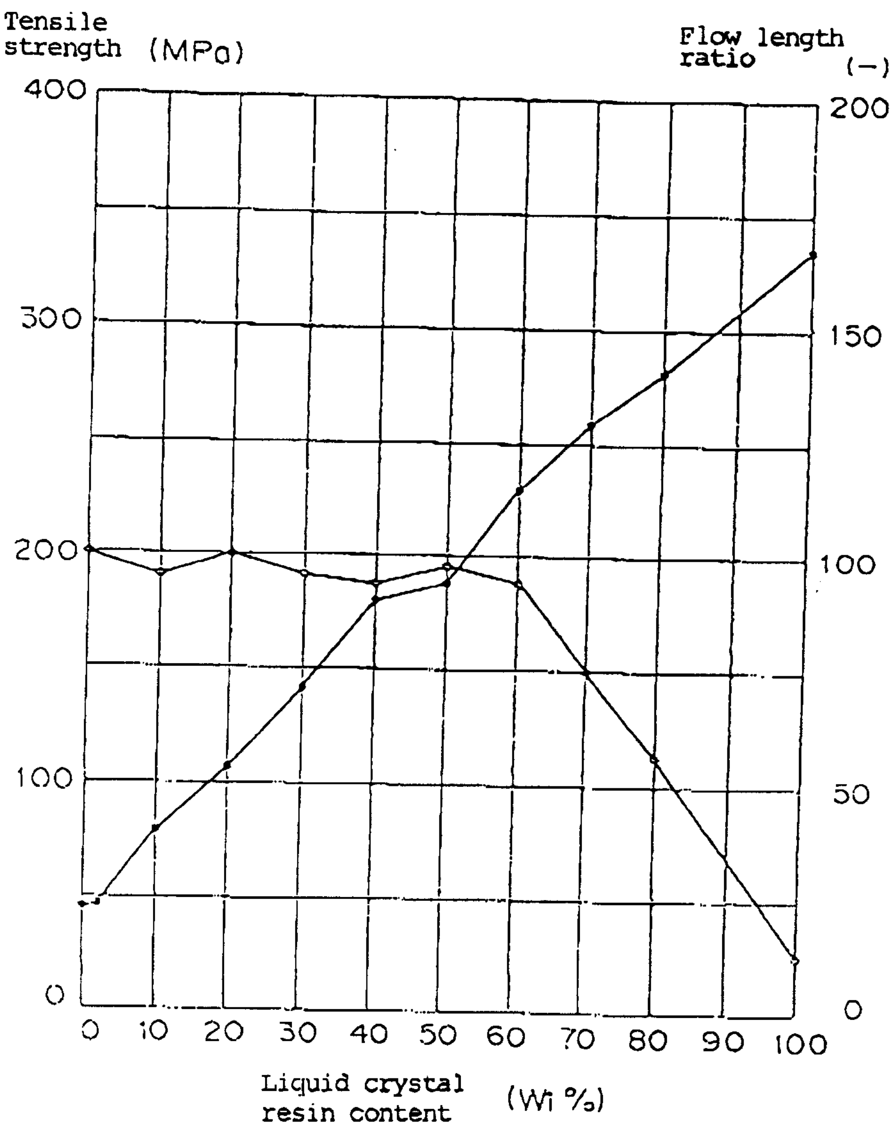

Tensile strength (MPa)
400
300
200
100
0
Flow length ratio (−)
200
150
100
50
0
0 10 20 30 40 50 60 70 80 90 100
Liquid crystal resin content (Wt %)

Fig. 7

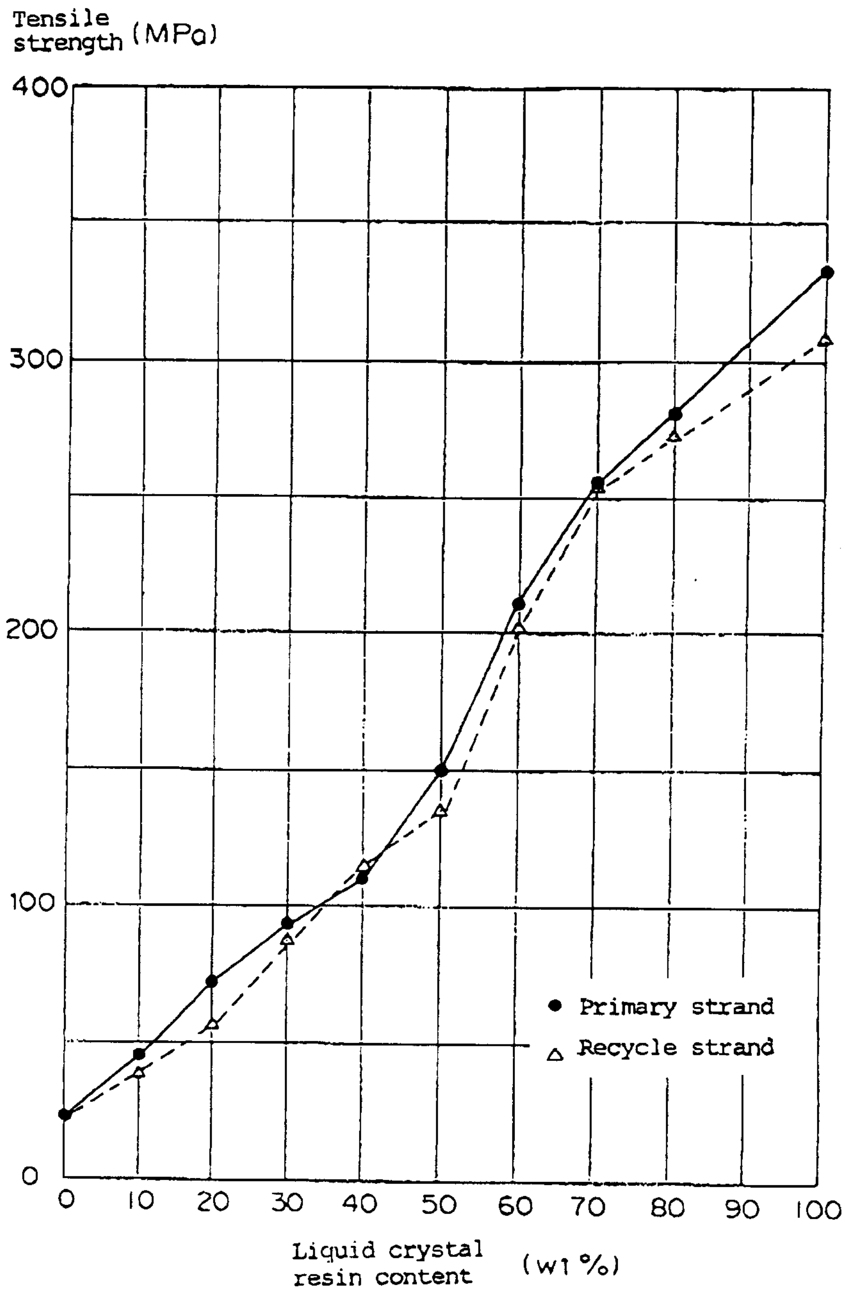
Tensile strength (MPa)
400
300
200
100
0
0
10
20
30
40
50
60
70
80
90
100
Liquid crystal resin content (wt %)
● Primary strand
△ Recycle strand

Fig. 8

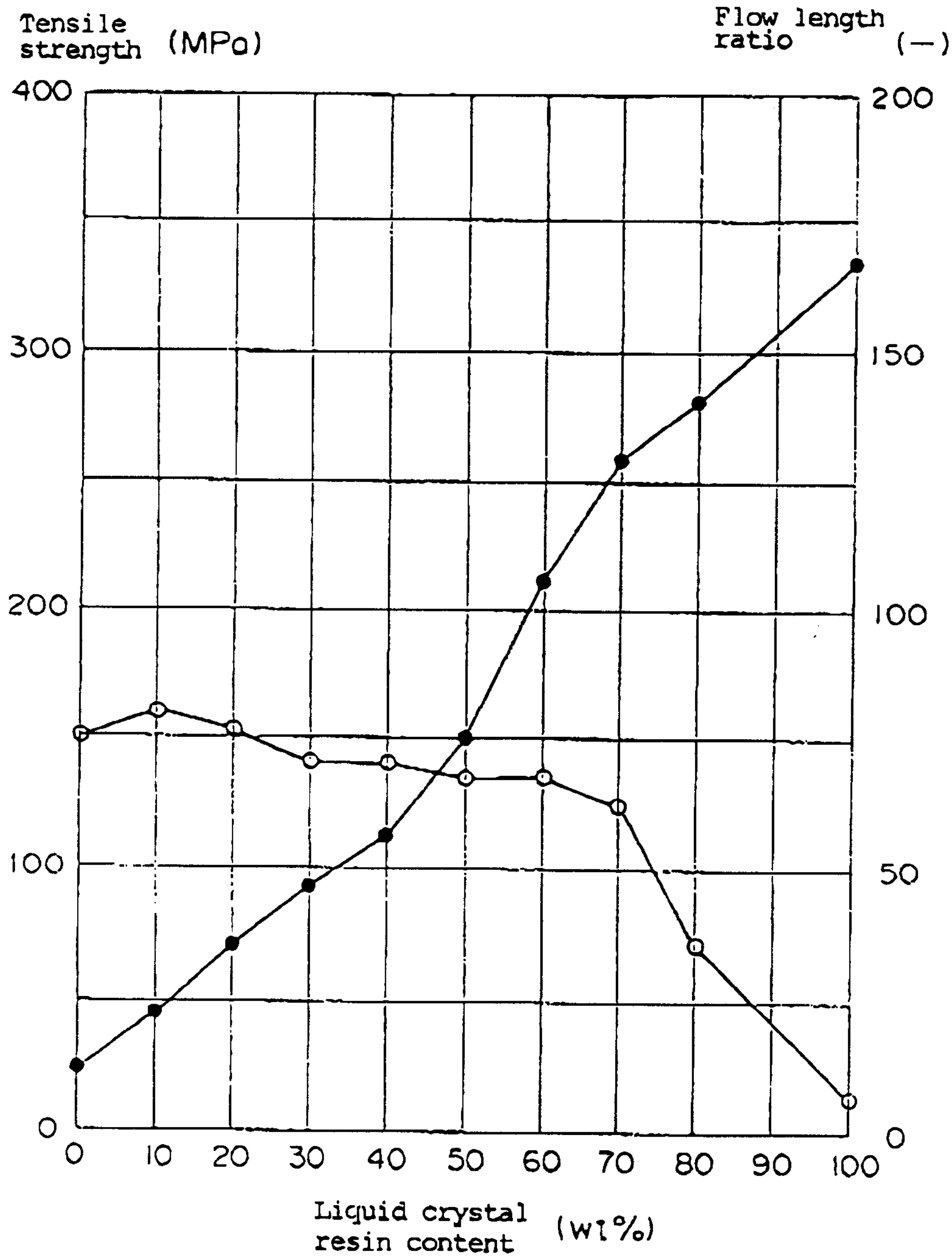
Tensile strength (MPa)
Flow length ratio (—)
400
300
200
100
0
200
150
100
50
0
0
10
20
30
40
50
60
70
80
90
100
Liquid crystal resin content (wt%)

Fig. 9

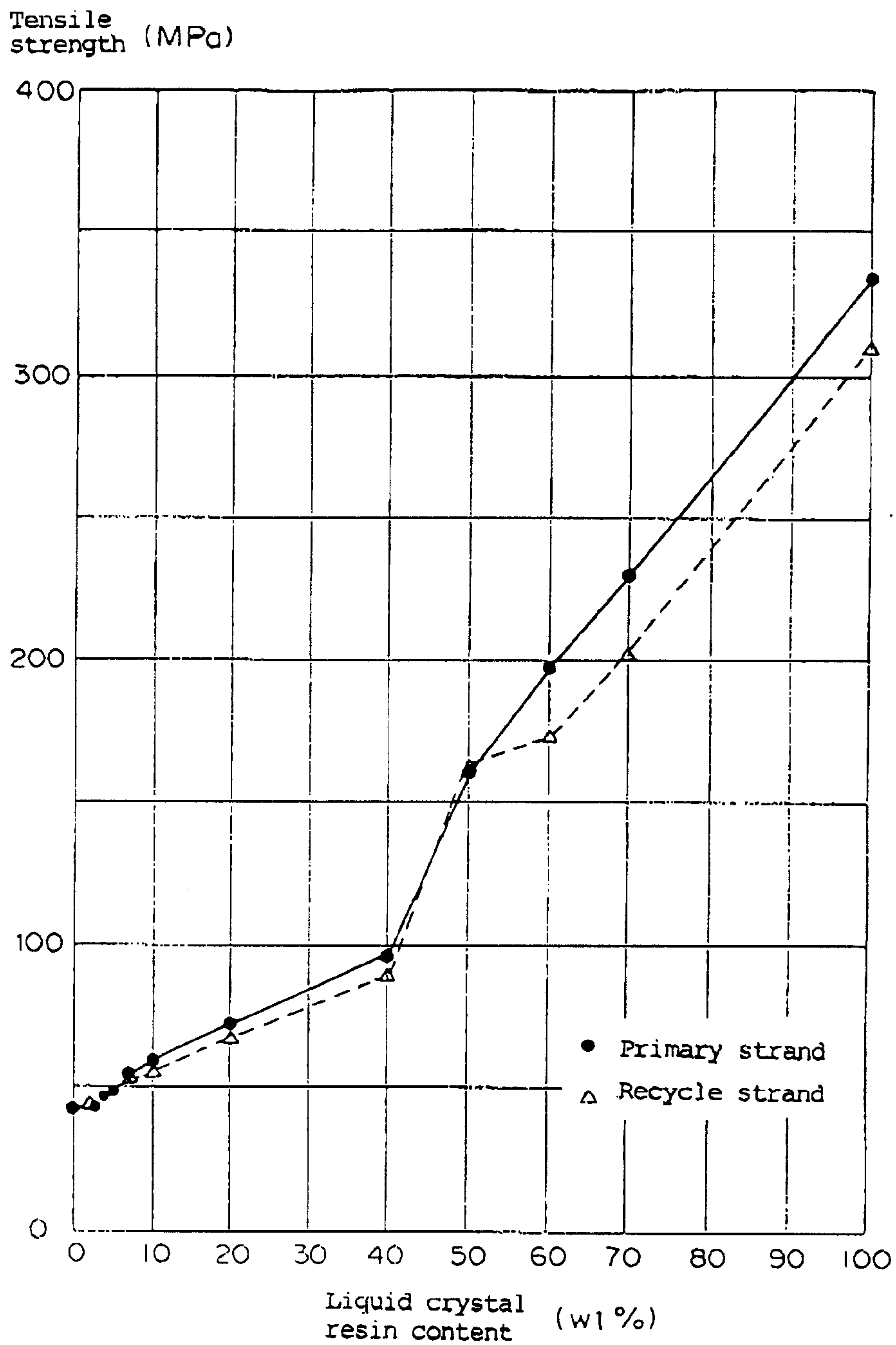
Tensile strength (MPa)
400
300
200
100
0
0
10
20
30
40
50
60
70
80
90
100
Liquid crystal resin content (wt%)
Primary strand
Recycle strand

Fig. 10

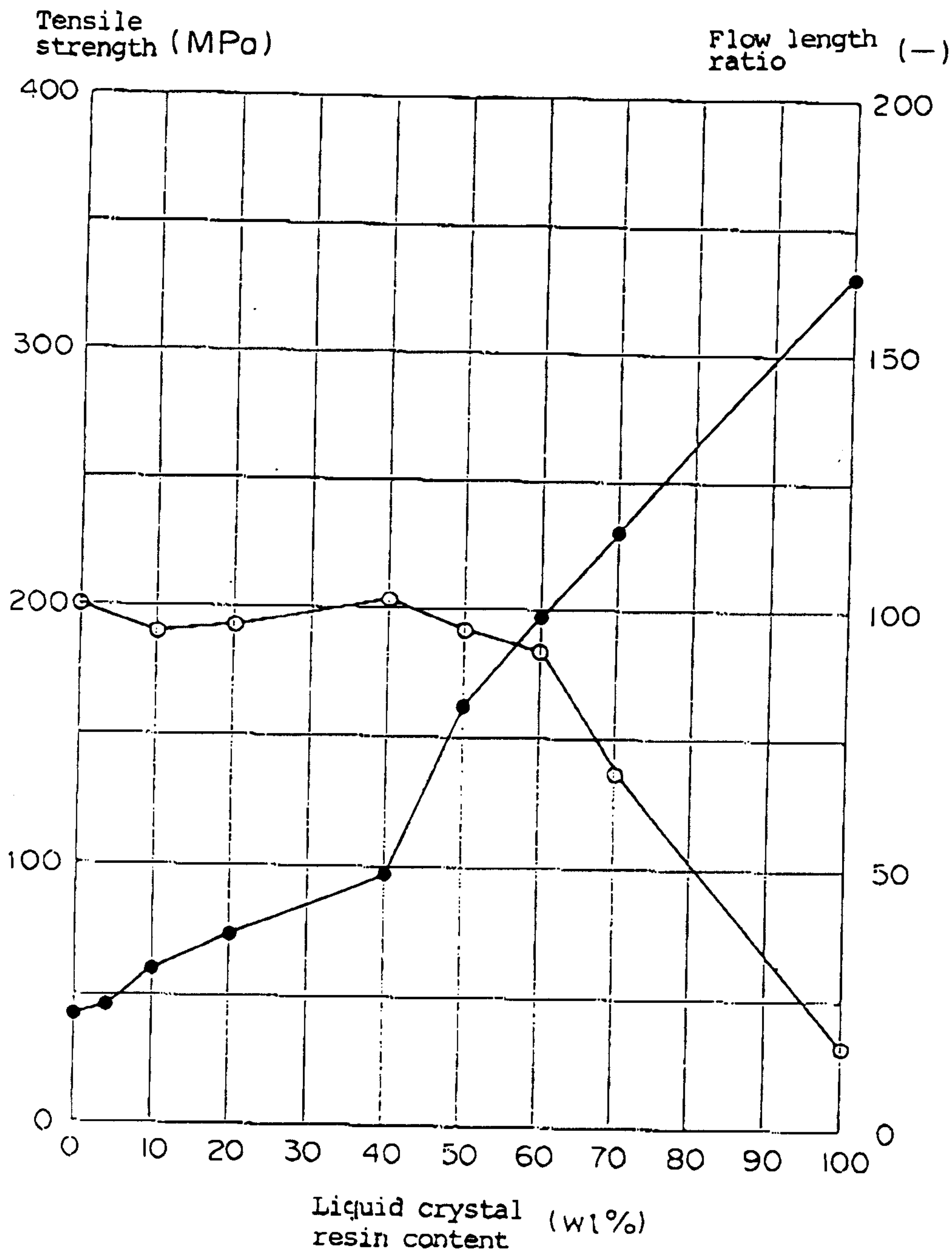
Tensile strength (MPa)
Flow length ratio (—)
400
300
200
100
0
200
150
100
50
0
0
10
20
30
40
50
60
70
80
90
100
Liquid crystal resin content (wt%)

Fig. 11

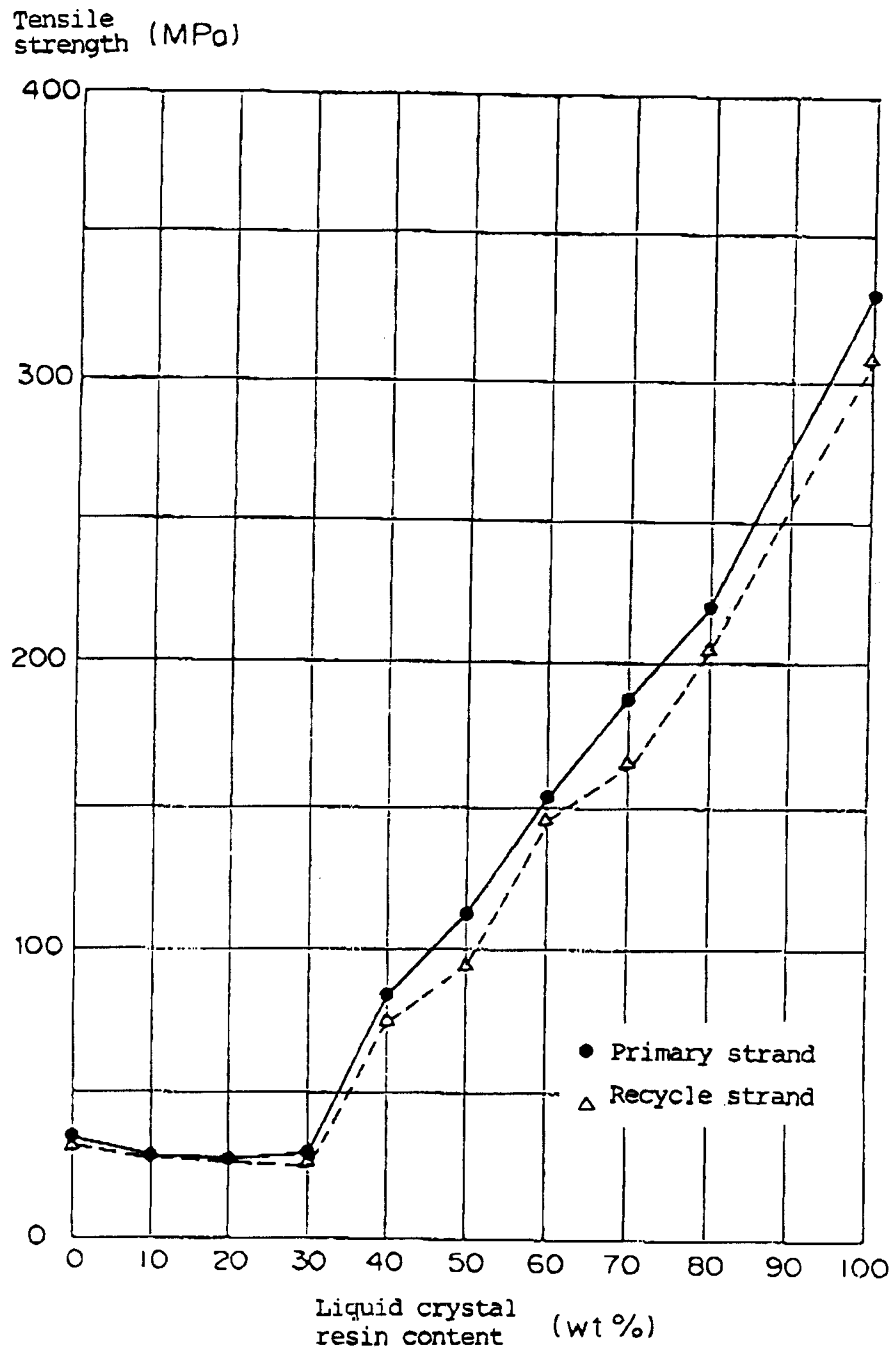
Tensile strength (MPa)
400
300
200
100
0
0
10
20
30
40
50
60
70
80
90
100
Liquid crystal resin content (wt %)
● Primary strand
△ Recycle strand

Fig. 12

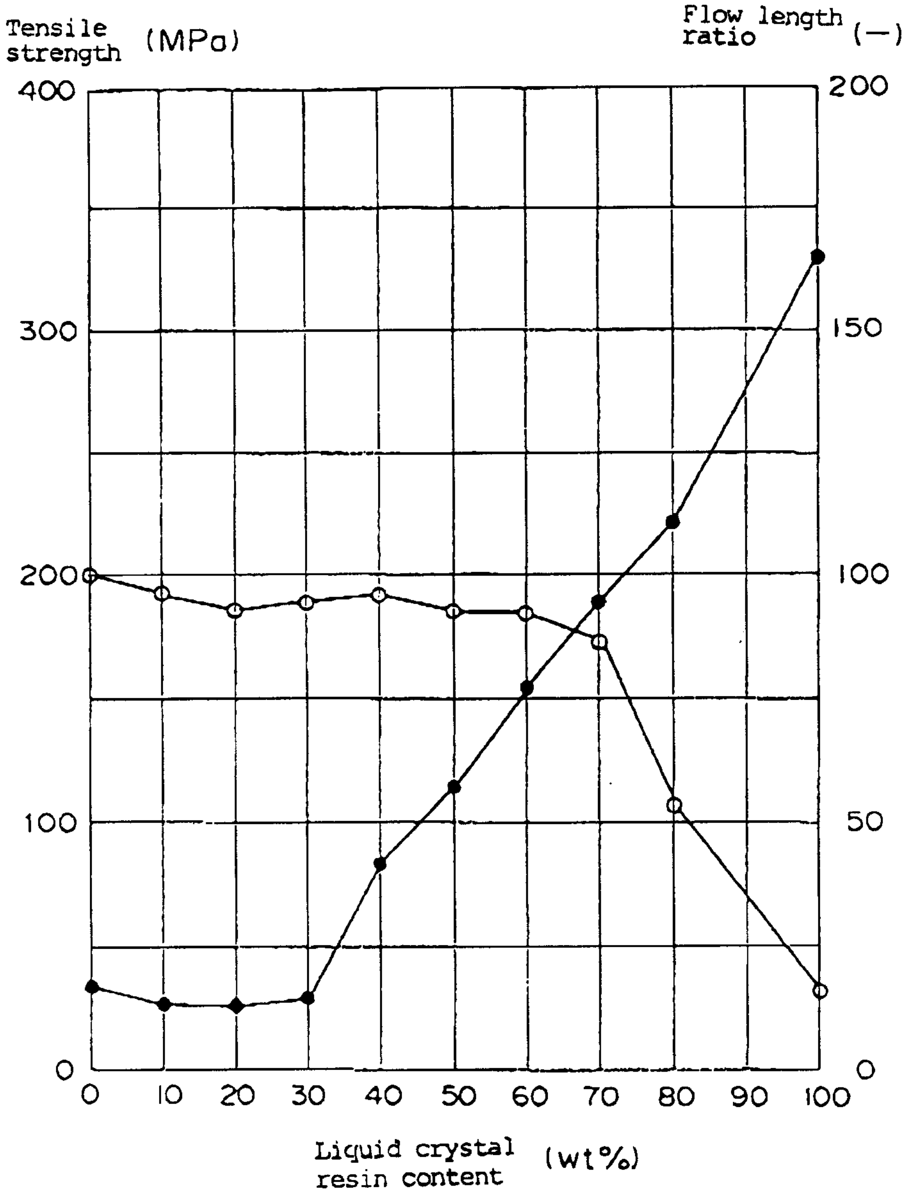
Tensile strength (MPa)
Flow length ratio (—)
400
300
200
100
0
200
150
100
50
0
0 10 20 30 40 50 60 70 80 90 100
Liquid crystal resin content (wt%)

Fig. 13

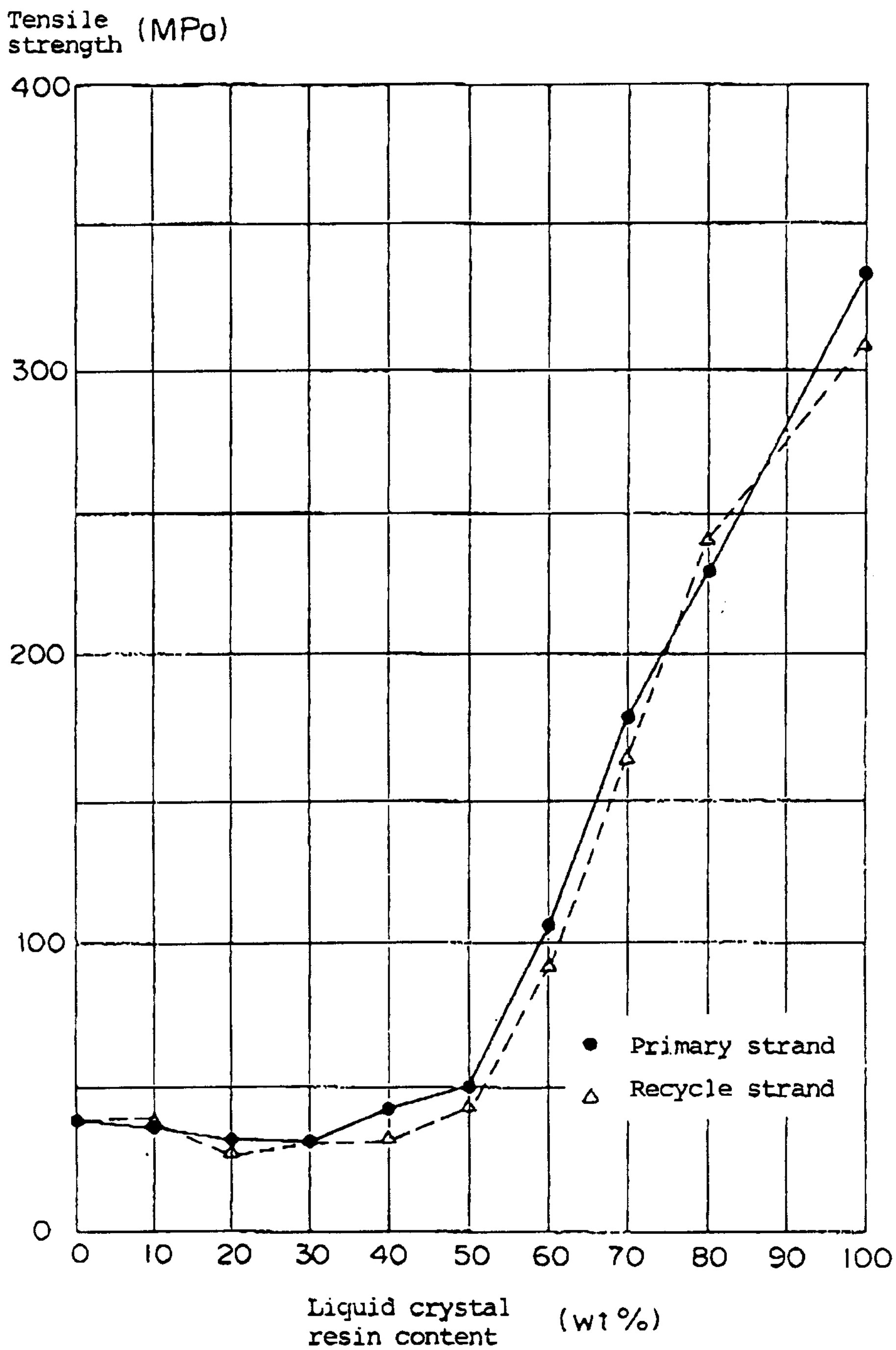
Tensile strength (MPa)
400
300
200
100
0
0
10
20
30
40
50
60
70
80
90
100
Primary strand
Recycle strand
Liquid crystal resin content (wt%)

Fig. 14

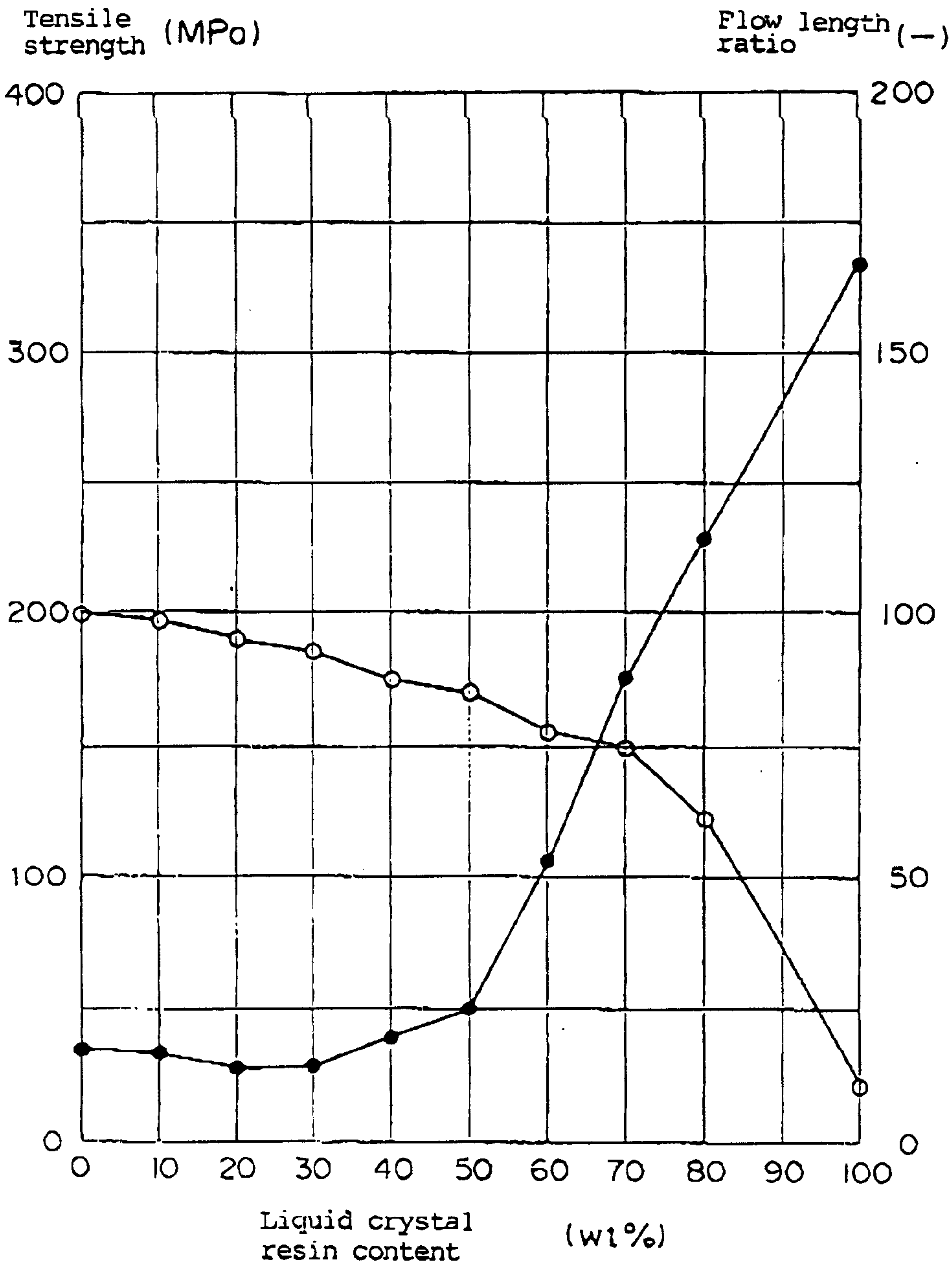
Tensile strength (MPa)
Flow length ratio (—)
400
300
200
100
0
200
150
100
50
0
0
10
20
30
40
50
60
70
80
90
100
Liquid crystal resin content (wt%)

Fig. 15

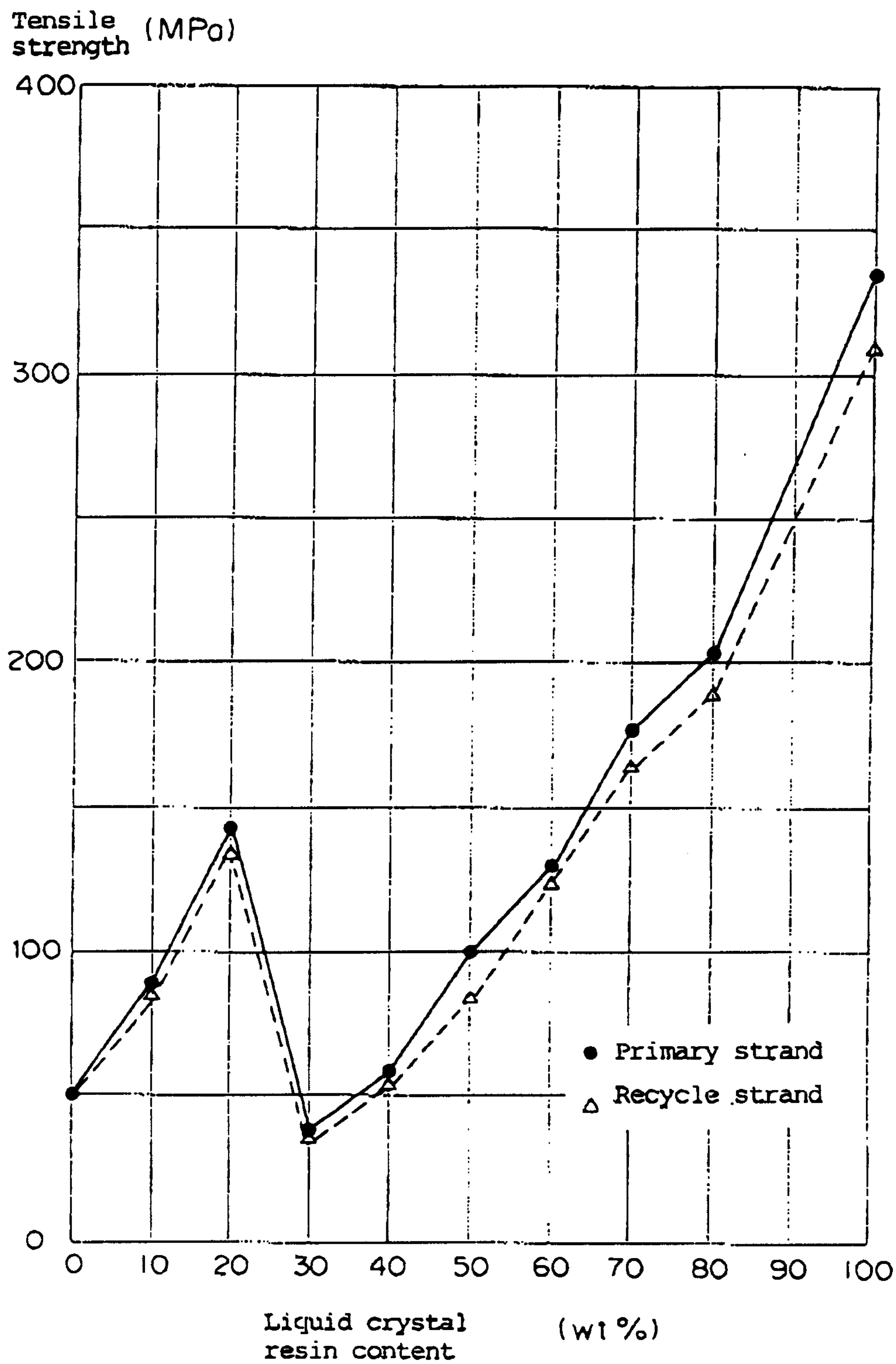

Tensile strength (MPa)
400
300
200
100
0
0
10
20
30
40
50
60
70
80
90
100
Liquid crystal resin content (wt %)
● Primary strand
△ Recycle strand

Fig. 16

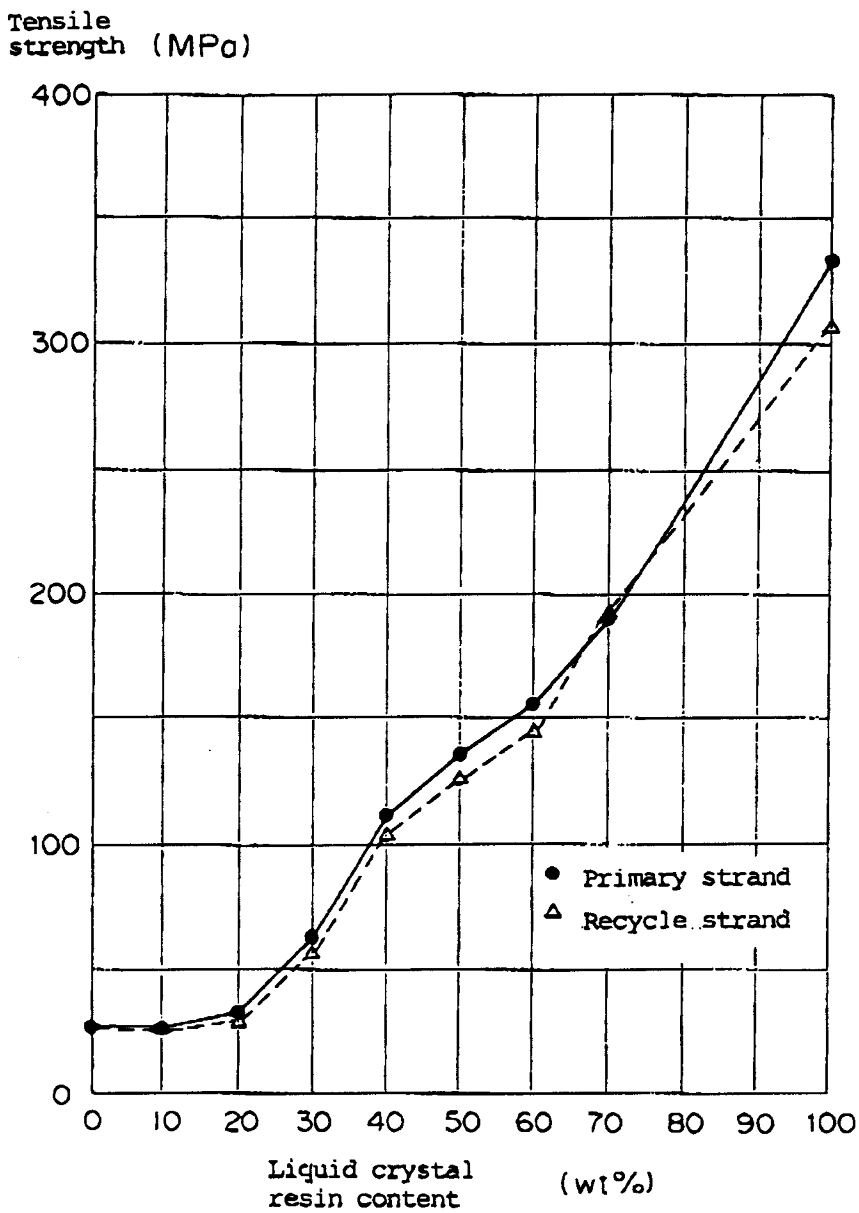
Tensile strength (MPa)
400
300
200
100
0
0 10 20 30 40 50 60 70 80 90 100
Liquid crystal resin content (wt%)
● Primary strand
△ Recycle strand

Fig. 17

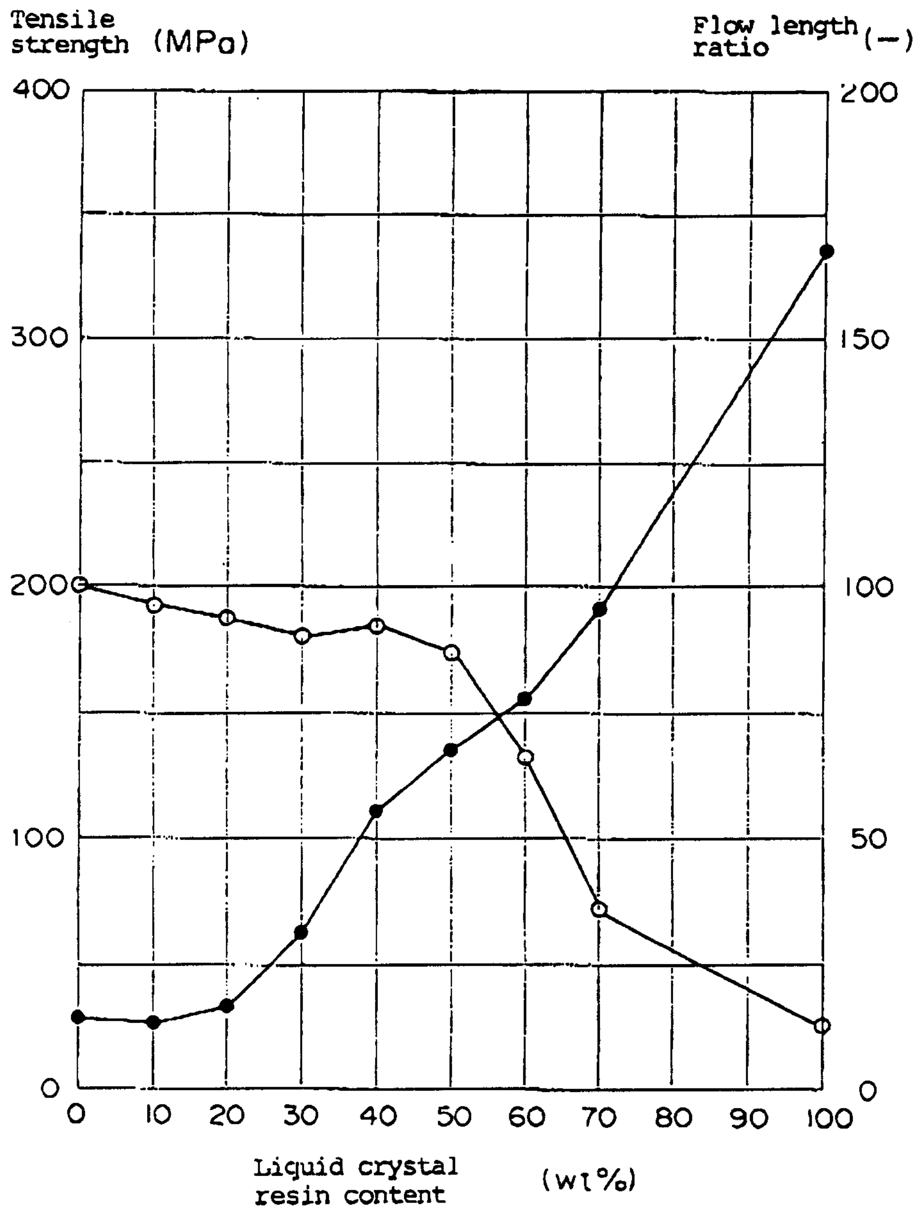
Tensile strength (MPa)
Flow length ratio (−)
400
300
200
100
0
200
150
100
50
0
0
10
20
30
40
50
60
70
80
90
100
Liquid crystal resin content
(wt%)

Fig. 18

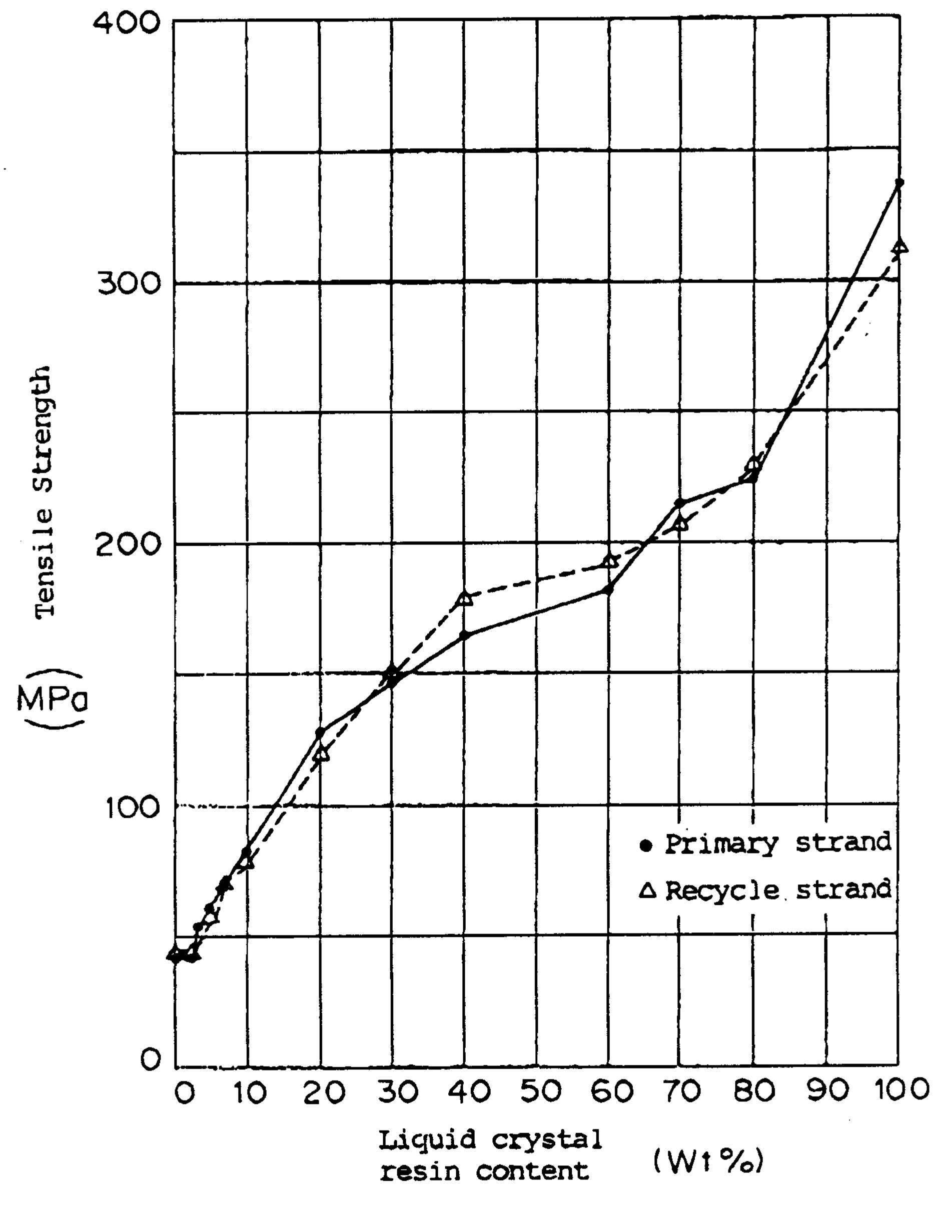
400
300
200
100
0
Tensile Strength
(MPa)
0 10 20 30 40 50 60 70 80 90 100
Liquid crystal
resin content (Wt%)
• Primary strand
Δ Recycle strand

Fig. 19

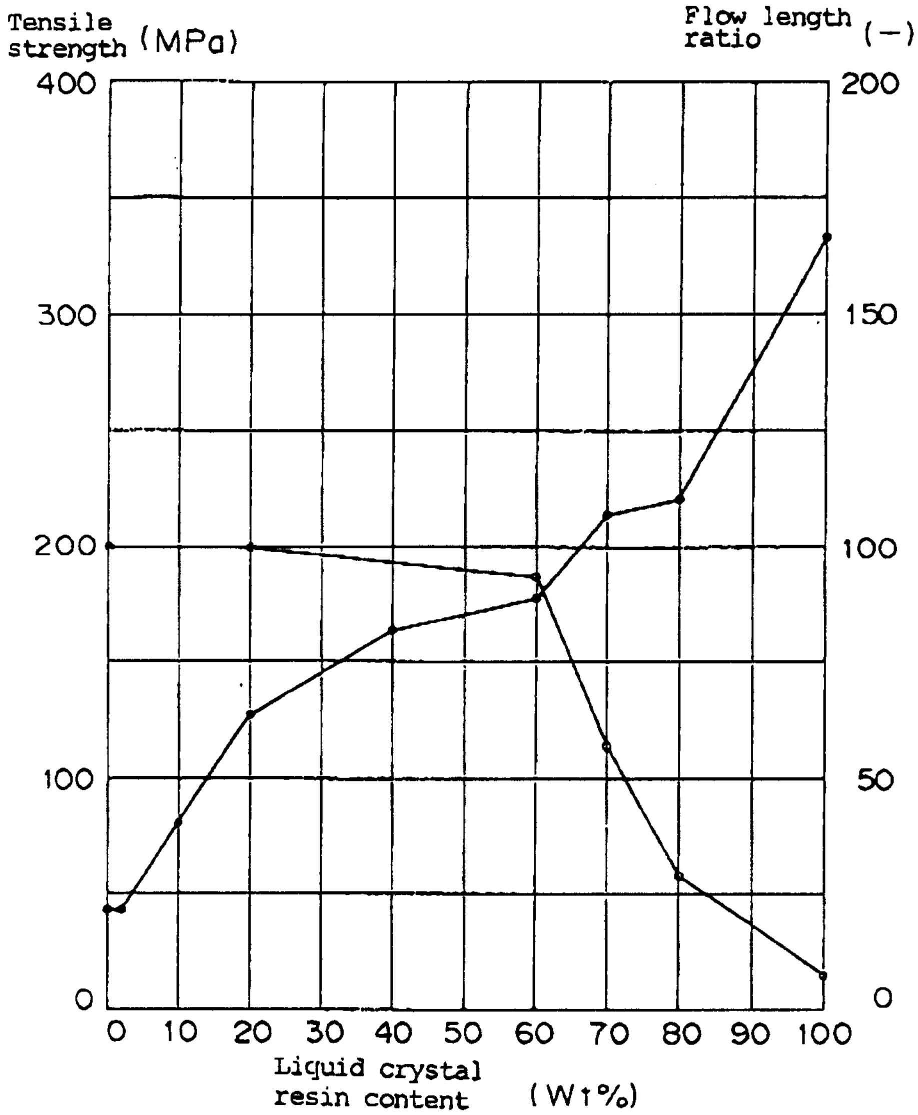
Tensile strength (MPa)
Flow length ratio (−)
400
300
200
100
0
200
150
100
50
0
0 10 20 30 40 50 60 70 80 90 100
Liquid crystal resin content (Wt%)

Fig. 20

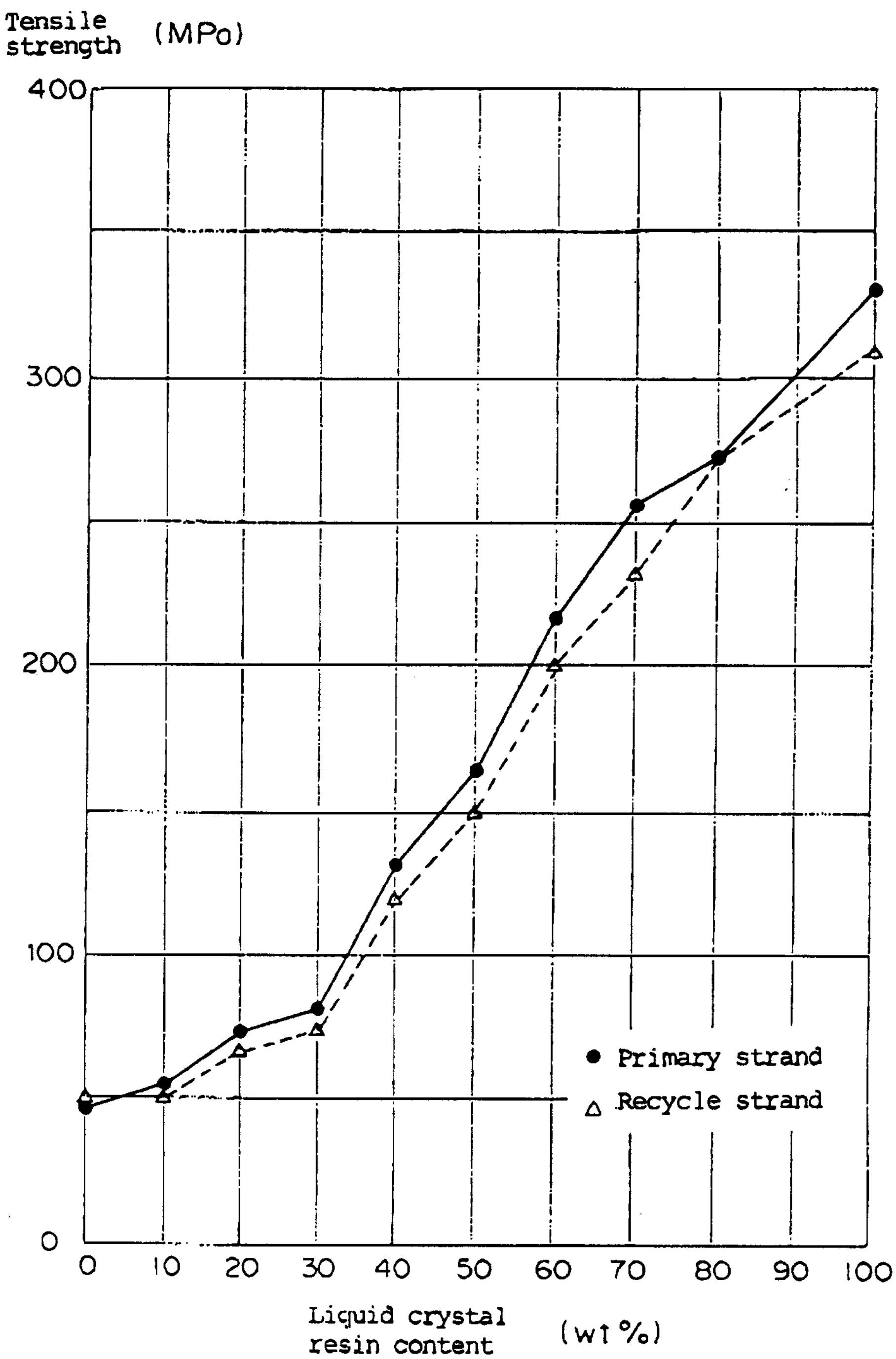
Tensile strength (MPo)
400
300
200
100
0
0
10
20
30
40
50
60
70
80
90
100
Liquid crystal resin content (wt %)
● Primary strand
△ Recycle strand

Fig. 21

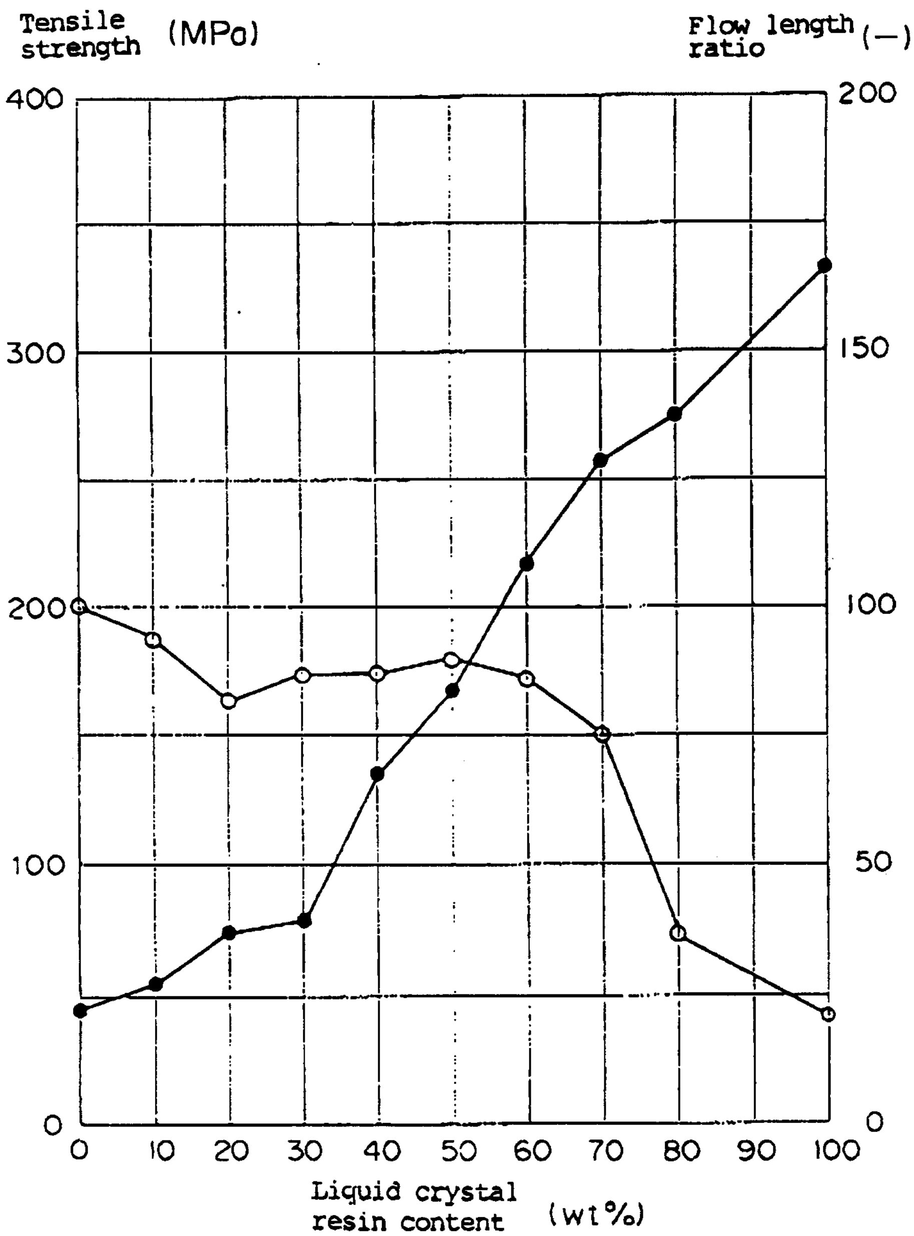
Tensile strength (MPa)
Flow length ratio (—)
400
300
200
100
0
200
150
100
50
0
0 10 20 30 40 50 60 70 80 90 100
Liquid crystal resin content (wt%)